(19) Europäisches Patentamt
European Patent Office
Office européen des brevets

(11) **EP 4 230 924 A2**

(12) **EUROPEAN PATENT APPLICATION**

(43) Date of publication:
**23.08.2023 Bulletin 2023/34**

(21) Application number: **23184362.4**

(22) Date of filing: **03.06.2020**

(51) International Patent Classification (IPC):
**F24F 11/46** (2018.01)   **F24F 11/87** (2018.01)
**F25B 1/00** (2006.01)   **F24F 140/00** (2018.01)
**F24F 140/12** (2018.01)   **F24F 140/20** (2018.01)

(52) Cooperative Patent Classification (CPC):
**F25B 25/005; F25B 49/02;** F25B 2400/06;
F25B 2700/21172; F25B 2700/21173

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **03.06.2019   JP 2019103863**
**03.06.2019   JP 2019103862**
**16.12.2019   JP 2019226702**

(62) Document number(s) of the earlier application(s) in
accordance with Art. 76 EPC:
**20818072.9 / 3 978 819**

(71) Applicant: **Daikin Industries, Ltd.
Osaka-shi, Osaka 530-0001 (JP)**

(72) Inventors:
• **NAKAHARA, Takayuki**
**Osaka-shi, Osaka, 530-0001 (JP)**
• **MANABE, Tomoki**
**Osaka-shi, Osaka, 530-0001 (JP)**

(74) Representative: **Conti, Marco
Bugnion S.p.A.
Via di Corticella, 87
40128 Bologna (IT)**

Remarks:
This application was filed on 10-07-2023 as a
divisional application to the application mentioned
under INID code 62.

(54) **DEVICE MANAGEMENT APPARATUS AND HEAT SOURCE SYSTEM**

(57)   Provided is a device management system that reduces extra change operations for the capacity of a specific device without increasing the complexity of a heat source system. A device management apparatus (50) manages a heat source device (10) that is a specific device that changes a state of a heat medium circulating through a heat source system (1). The device management apparatus (50) receives a state value of the heat medium that is measured by an outlet temperature sensor (63) included in the heat source system (1), and prohibits a change operation of a capacity of the heat source device (10) on the basis of a parameter related to a change in the state value.

FIG. 1

**EP 4 230 924 A2**

**Description**

**TECHNICAL FIELD**

The present disclosure relates to a device management apparatus, a heat source system, a management apparatus, and a device management system.

**BACKGROUND ART**

There has been available a heat source system including a plurality of refrigerating machines through which a heat medium circulates, such as a refrigeration system described in PTL 1 (Japanese Unexamined Patent Application Publication No. 10-89742). Some of such heat source systems are configured to perform control to change the number of refrigerating machines in operation to change the refrigerating capacity of the refrigerating machines in accordance with the amount of heat to be supplied. To suppress hunting of a control variable in such a refrigeration system, for example, a method in the refrigeration system described in PTL 1 for adjusting a control gain on the basis of the number of refrigerating machines in operation, the operating state of the refrigerating machines, the outside air temperature, and so on is disclosed.

**SUMMARY OF INVENTION**

< Technical Problem >

However, the adjustment of the control gain based on the number of refrigerating machines in operation, the operating state of the refrigerating machines, the outside air temperature, and so on, as described in PTL 1, involves complex control, and it is difficult to manufacture and adjust the heat source system.
A device management system for managing a specific device that changes the state of a heat medium circulating through a heat source system has to address reducing extra change operations for the capacity of the specific device without increasing the complexity of the heat source system.

< Solution to Problem >

Aim of the present invention is to provide a device management apparatus and a heat source system, which improve the state of the art indicated above. This aim is achieved by the device management apparatus and the heat source system, according to the corresponding appended claims.
Please note that aspects 9 to 25 of the present description are not encompassed in the wording the claims.
A device management apparatus according to a first aspect is a device management apparatus for managing a specific device that changes a state of a heat medium circulating through a heat source system. The device management apparatus receives a state value of the heat medium that is measured by a sensor included in the heat source system, and prohibits a change operation of a capacity of the specific device on the basis of a parameter related to a change in the state value.
The device management apparatus according to the first aspect can reduce extra change operations of the capacity of the specific device with a simple configuration.
A device management apparatus according to a second aspect is the device management apparatus according to the first aspect, in which the parameter includes a variable related to at least one of the number of extreme values of the state value and a fluctuation range of the state value in a predetermined period.
The device management apparatus according to the second aspect can reduce unnecessary change operations in a situation where the state value is unstable.
A device management apparatus according to a third aspect is the device management apparatus according to the second aspect, in which the parameter is a variable related to the number of extreme values of the state value and a variance of the state value in the predetermined period.
The device management apparatus according to the third aspect can improve the accuracy of suppressing unnecessary operations in accordance with the behavior of fluctuations in the state value.
A device management apparatus according to a fourth aspect is the device management apparatus according to any of the first aspect to the third aspect, in which the device management apparatus determines a threshold value of the parameter indicating a limit for prohibiting the change operation of the capacity of the specific device, from a relationship between a value of the parameter and the number of times the capacity of the specific devices is changed.
The device management apparatus according to the fourth aspect can easily prohibit the change operation of the capacity of the specific device at an appropriate timing by using the threshold value.

A heat source system according to a fifth aspect is the system according to any of the first aspect to the fourth aspect, in which the device management apparatus notifies whether the device management apparatus is in a state in which the change operation is prohibited or in a state in which the change operation is not prohibited.

The heat source system according to the fifth aspect can inform outside of the management state.

A heat source system according to a sixth aspect includes a specific device that changes a state of a heat medium circulating through the heat source system, a sensor that measures the state of the heat medium, and a device management apparatus that receives a state value of the heat medium that is measured by the sensor and prohibits a change operation of a capacity of the specific device on the basis of a parameter related to a change in the state value, in which the sensor is a temperature sensor that measures a temperature of the heat medium, a flow rate sensor that measures a flow rate of the heat medium, or a pressure sensor that measures a pressure of the heat medium.

The heat source system according to the sixth aspect can reduce extra change operations of the capacity of the specific device with a simple configuration in which the value of the temperature, flow rate, or pressure of the heat medium is used as the state value of the heat medium.

A heat source system according to a seventh aspect is the system according to the sixth aspect, in which the specific device is a heat source device that changes the temperature of the heat medium, the sensor is an outlet temperature sensor that measures a temperature of the heat medium exiting from the heat source device, and when a difference between an outlet temperature measured by the outlet temperature sensor and a target temperature is larger than a predetermined value, the prohibition of the change operation of a capacity of the heat source device to change the temperature of the heat medium is canceled.

The heat source system according to the seventh aspect can appropriately perform the change operation of the capacity when the difference between the outlet temperature and the target temperature is large and the capacity is to be changed.

A heat source system according to an eighth aspect is the system according to the sixth aspect or the seventh aspect, in which the specific device is a chiller, a cooling tower, or a pump.

The heat source system according to the eighth aspect can reduce extra change operations of the capacity of the chiller, the cooling tower, or the pump with a simple configuration.

A device management apparatus according to a ninth aspect is a device management apparatus for managing a heat source device that changes a temperature of a heat medium circulating through a heat source system. The device management apparatus determines a standby time in accordance with a parameter relating to a circulation flow rate of the heat medium, the standby time being a time for prohibiting a change operation for a predetermined period from a previous change operation, the change operation being an operation for changing a capacity of the heat source device to change the temperature of the heat medium, and prohibits the change operation of the capacity of the heat source device during the standby time.

The device management apparatus according to the ninth aspect can perform management in which suppression of an increase in the energy consumption of the heat source system and comfort are balanced.

A device management apparatus according to a tenth aspect is the device management apparatus according to the ninth aspect, in which a plurality of the heat source devices are provided, and the change operation is to change the number of heat source devices that are in operation.

The device management apparatus according to the tenth aspect can perform management, in which suppression of an increase in energy consumption and comfort are balanced, on the heat source system including a plurality of heat source devices.

A device management apparatus according to an eleventh aspect is the device management apparatus according to the ninth aspect or the tenth aspect, in which the parameter is a variable related to at least one of a capacity of a circulation pump that circulates the heat medium, a degree of flow rate adjustment of a use-side device that uses the heat medium, and a pressure difference between the heat medium flowing into the use-side device and the heat medium flowing out of the use-side device.

The device management apparatus according to the eleventh aspect can easily determine the standby time by using at least one of the capacity of the circulation pump, the degree of flow rate adjustment, and the pressure difference of the heat medium.

A device management apparatus according to a twelfth aspect is the device management apparatus according to any of the ninth aspect or the tenth aspect, in which the parameter is a variable related to a flow rate of a circulation pump that circulates the heat medium, or a variable related to the flow rate of the circulation pump and a retained amount of water in the heat source system.

The device management apparatus according to the twelfth aspect determines the standby time by using the flow rate of the circulation pump, which makes the standby time more likely to be appropriate for the circulation of the heat medium.

A device management apparatus according to a thirteenth aspect is the device management apparatus according to the twelfth aspect, in which the retained amount of water is a value described in a design specification or a value calculated from a pipe length and a pipe cross-sectional area described in a drawing.

A device management apparatus according to a fourteenth aspect is the device management apparatus according to any of the ninth aspect to the thirteenth aspect, further including an outlet temperature sensor that measures a temperature of the heat medium exiting from the heat source device, in which when a difference between an outlet temperature measured by the outlet temperature sensor and a target temperature is larger than a predetermined value, the prohibition of the change operation of the capacity of the heat source device to change the temperature of the heat medium is canceled.

The management apparatus according to the fourteenth aspect can improve the accuracy of management of the heat source device in which suppression of an increase in energy consumption and comfort are balanced at the time of activation of the heat source system.

A management apparatus according to a fifteenth aspect is the management apparatus according to any of the ninth aspect to the fourteenth aspect, in which the management apparatus notifies whether the management apparatus is in a state in which the change operation is prohibited or in a state in which the change operation is not prohibited.

The management apparatus according to the fifteenth aspect can inform outside of the management state.

A heat source system according to a sixteenth aspect includes a chiller, a cooling tower, or a water heater that changes a temperature of a heat medium circulating through the heat source system, and a management apparatus that determines a standby time in accordance with a parameter relating to a circulation flow rate of the heat medium, and prohibits a change operation for changing a capacity of the chiller, the cooling tower, or the water heater until a time interval from a previous change operation exceeds the standby time.

The heat source system according to the sixteenth aspect can perform management, in which suppression of an increase in the energy consumption of the heat source system and comfort are balanced, on the chiller, the cooling tower, or the water heater.

A device management system according to a seventeenth aspect is a system for managing the number of operating devices among heat source devices. The device management system includes a number-of-device determination unit and a standby time determination unit. The number-of-device determination unit determines an increase or a decrease in the number of operating devices when a condition for changing the number of operating devices regarding a thermal load is continuously satisfied for a predetermined standby time. The standby time determination unit determines a length of the standby time on the basis of predicted thermal load information.

This contributes to controlling the number of operating devices among the heat source devices to an appropriate number.

A device management system according to an eighteenth aspect is the system according to the seventeenth aspect, further including a thermal load calculation unit and an accumulation unit. The thermal load calculation unit calculates thermal load information. The accumulation unit accumulates the thermal load information calculated by the thermal load calculation unit. The predicted thermal load information is calculated on the basis of the thermal load information accumulated in the accumulation unit.

Accordingly, the number of operating devices among the heat source devices is controlled to an appropriate number on the basis of the actual thermal load.

A device management system according to a nineteenth aspect is the system according to the seventeenth aspect or the eighteenth aspect, in which the standby time determination unit, on the basis of the predicted thermal load information, reduces the length of the standby time in a case where the number of operating devices among the heat source devices is predicted to be insufficient. Alternatively, the standby time determination unit increases the length of the standby time in a case where the number of operating devices among the heat source devices is predicted to be excessive.

This suppresses an insufficiency in the number of operating devices among the heat source devices or an excess in the number of operating devices among the heat source devices and contributes to controlling the number of operating devices among the heat source devices to an appropriate number.

A device management system according to a twentieth aspect is the system according to any of the seventeenth aspect to the nineteenth aspect, in which the accumulation unit accumulates information on the number of operating devices among the heat source devices for processing the thermal load, in association with the thermal load information.

A device management system according to a twenty-first aspect is the system according to any of the seventeenth aspect to the twentieth aspect, in which the thermal load calculation unit calculates the thermal load information on the basis of an inlet temperature that is a temperature of a heat medium entering the heat source devices and an outlet temperature that is a temperature of the heat medium exiting from the heat source devices. The accumulation unit further accumulates the thermal load information calculated by the thermal load calculation unit, weather information, and/or operating device information of the heat source devices in association with each other.

A device management system according to a twenty-second aspect is the system according to any of the seventeenth aspect to the twenty-first aspect, in which the standby time determination unit determines, as the length of the standby time, a value obtained by, in a case where the number of occurrences of a predicted thermal-load local maximum value included in the predicted thermal load information is one, dividing a time required from an operating start time of the heat source devices to a time at which the predicted thermal-load local maximum value occurs by the required number of times the number of devices is increased to make the number of operating devices among the heat source devices at a time of occurrence of the predicted thermal-load local maximum value. The predicted thermal-load local maximum value is a local maximum value of predicted values of the thermal load included in the predicted thermal load information.

Accordingly, in a case where the number of occurrences of the predicted thermal-load local maximum value is one, the number of operating devices among the heat source devices is controlled to an appropriate number.

A device management system according to a twenty-third aspect is the system according to any of the seventeenth aspect to the twenty-second aspect, in which in a case where the number of occurrences of a predicted thermal-load local maximum value included in the predicted thermal load information is plural, the standby time determination unit sets the length of the standby time from a time at which the predicted thermal-load local minimum value included in the predicted thermal load information occurs until the predicted thermal-load local maximum value next occurs, to a value obtained by dividing a time required from the time at which the predicted thermal-load local minimum value included in the predicted thermal load information occurs until the predicted thermal-load local maximum value next occurs by the number of times the number of operating devices is increased or decreased in the time slot. The predicted thermal-load local maximum value is a local maximum value of predicted values of the thermal load included in the predicted thermal load information. The predicted thermal-load local minimum value is a local minimum value of predicted values of the thermal load included in the predicted thermal load information.

Accordingly, in a case where the number of occurrences of the predicted thermal-load local maximum value is plural, the number of operating devices among the heat source devices is controlled to an appropriate number.

A device management system according to a twenty-fourth aspect is the system according to any of the seventeenth aspect to the twenty-second aspect, in which the standby time determination unit calculates a time at which the number of operating devices among the heat source devices is increased or decreased, on the basis of the thermal load information and the information on the number of operating devices among the heat source devices. Further, the standby time determination unit sets, as the length of the standby time, a time period from when the number of operating devices is changed to when the number of operating devices is next changed.

This contributes to controlling the number of operating devices among the heat source devices to an appropriate number.

A device management system according to a twenty-fifth aspect is the system according to any of the seventeenth aspect to the twenty-fourth aspect, further including a deviation information output unit. The deviation information output unit outputs deviation information in a case where a deviation of an actual thermal load in the heat source devices from the thermal load information is larger than a predetermined threshold value.

**BRIEF DESCRIPTION OF DRAWINGS**

[Fig. 1] Fig. 1 is a block diagram illustrating an overview of an example configuration of a heat source system according to an embodiment.

[Fig. 2] Fig. 2 is a block diagram illustrating an overview of an example detailed configuration of the heat source system according to the embodiment.

[Fig. 3] Fig. 3 is a flowchart for describing a determination flow for prohibiting a change operation of the capacity of a specific device.

[Fig. 4A] Fig. 4A is a graph for describing pull-down rate control.

[Fig. 4B] Fig. 4B is a graph for describing a problem of pull-down rate control.

[Fig. 4C] Fig. 4C is a graph for describing pull-up rate control.

[Fig. 5A] Fig. 5A is a graph illustrating an example gradual temperature change with large amplitudes and long periods.

[Fig. 5B] Fig. 5B is a graph illustrating an example fine temperature change with small amplitudes and short periods.

[Fig. 6] Fig. 6 is a graph for describing types of temperature changes.

[Fig. 7] Fig. 7 is a graph for describing the number of extreme values of temperature changes.

[Fig. 8] Fig. 8 is a graph for describing variances of temperature changes.

[Fig. 9] Fig. 9 is a graph for describing values of parameters related to temperature changes.

[Fig. 10] Fig. 10 is a block diagram illustrating an overview of an example configuration of a heat source system according to an embodiment.

[Fig. 11] Fig. 11 is a block diagram illustrating an overview of an example detailed configuration of the heat source system according to the embodiment.

[Fig. 12] Fig. 12 is a graph for describing an example parameter relating to the circulation flow rate of a heat medium.

[Fig. 13] Fig. 13 is a graph for describing another example parameter relating to the circulation flow rate of the heat medium.

[Fig. 14] Fig. 14 is a block diagram illustrating an overview of an example configuration of a heat source system according to Modification 2A.

[Fig. 15] Fig. 15 is a block diagram illustrating an overview of an example configuration of a heat source system according to Modification 2B.

[Fig. 16] Fig. 16 is a block diagram illustrating an overview of an example configuration of a heat source system according to Modification 2C.

[Fig. 17] Fig. 17 is a block diagram illustrating an overview of an example configuration of a heat source system according to Modification 2D.

[Fig. 18] Fig. 18 is a schematic configuration diagram of a device management system.

[Fig. 19] Fig. 19 is a schematic configuration diagram of a chiller unit.

[Fig. 20] Fig. 20 is a block diagram illustrating the configuration and functional units of a controller.

[Fig. 21] Fig. 21 is a graph illustrating a thermal load.

[Fig. 22] Fig. 22 is a graph illustrating predicted values of the thermal load.

[Fig. 23] Fig. 23 is a flowchart illustrating a process flow for determining a standby time.

[Fig. 24] Fig. 24 is a graph illustrating predicted values of the thermal load.

## DESCRIPTION OF EMBODIMENTS

<First Embodiment>

(1) Overall Configuration

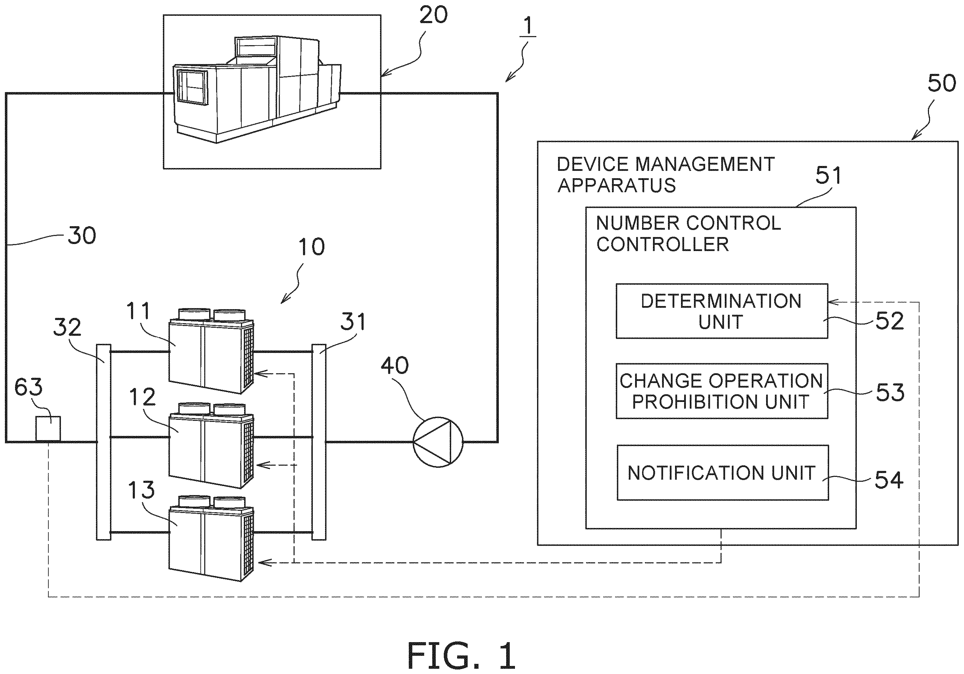

As illustrated in Fig. 1, a heat source system 1 includes heat source devices 10, a use-side device 20, a flow path 30, a pump 40, and a device management apparatus 50. The heat source devices 10 are devices each configured to change the temperature of a heat medium circulating through the heat source system 1. In other words, in this embodiment, the heat source devices 10 are each a specific device configured to change the state of a heat medium circulating through the heat source system 1. Examples of the heat source devices 10 include chillers, cooling towers, and water heaters. The use-side device 20 is a device that uses the heat medium. Examples of the use-side device 20 include an air handling unit, a fan coil unit, and an air conditioner including a water heat exchanger. The heat source system 1 according to this embodiment includes three heat source devices 11, 12, and 13. Reference numeral "10" is used to indicate all of the heat source devices, and reference numerals "11, 12, and 13" are used to indicate individual heat source devices. In embodiments, the three heat source devices 11, 12, and 13 will be described as an example. However, the heat source system 1 may include two heat source devices or four or more heat source devices.

The flow path 30 is mainly a pipe connecting the heat source devices 10 and the use-side device 20. The heat medium of the heat source system 1 circulates between the heat source devices 10 and the use-side device 20 through the flow path 30. The flow path 30 includes a return header 31 and a feed header 32. Water fed out of the pump 40 is distributed to the heat source devices 11 to 13 by the return header 31. Cold water exiting from the heat source devices 11 to 13 is mixed by the feed header 32 and fed to the use-side device 20.

The pump 40 applies pressure to the heat medium in the flow path 30 to circulate the heat medium. The pump 40 is configured to be capable of changing the amount of circulation of the heat medium circulating through the flow path 30. Examples of the method for changing the amount of circulation include a method for changing the number of revolutions of the pump 40, which is of a variable capacity type and is inverter controlled, according to the frequency of the inverter to change the amount of discharge. Other examples of the method for changing the amount of circulation include a method for connecting a plurality of constant-speed pumps, which rotate at constant speeds, in parallel and changing the number of constant-speed pumps to be operated.

The device management apparatus 50 manages the heat source devices 10. The device management apparatus 50 has a function of determining whether to prohibit a change operation, on the basis of a parameter related to a change in state value. The device management apparatus 50 prohibits a change operation for changing the capacity of the heat source devices 10, on the basis of a parameter related to a change in state value. In this embodiment, the change operation prohibited by the device management apparatus 50 is an operation of changing the number of heat source devices 10 that are in operation.

The device management apparatus 50 includes a number control controller 51 for performing number control of the heat source devices 10. The number control controller 51 includes a determination unit 52, a change operation prohibition unit 53, and a notification unit 54. The determination unit 52 determines whether to prohibit a change operation on the basis of a parameter related to a change in state value. The change operation prohibition unit 53 prohibits the change operation of the capacity of the heat source devices 10 on the basis of the determination result of the determination unit 52. In the device management apparatus 50, the notification unit 54 notifies whether the device management apparatus 50 is in a state in which the change operation is prohibited or in a state in which the change operation is not prohibited. Examples of the notification method performed by the notification unit 54 include a method of notifying a state in which the change operation is prohibited by using a buzzer, a method of notification by displaying, on a display device, whether to prohibit the change operation, and a method of transmitting information indicating whether to provide notification via a public line.

The device management apparatus 50 is implemented by, for example, a computer. The device management apparatus 50 includes a control calculation device and a storage device. The control calculation device can be implemented using a processor such as a CPU or a GPU. The control calculation device reads a program stored in the storage device and performs predetermined image processing and calculation processing in accordance with the program. Further, the control calculation device can write a calculation result to the storage device or read information stored in the storage device in accordance with the program. Fig. 1 illustrates various functional blocks of the device management apparatus 50 implemented by the control calculation device. The storage device can be used as a database.

The device management apparatus 50 may be installed in a property such as a building in which the heat source devices 10 are installed, or may be installed in a remote place away from the property. Examples of the installation in a remote place include installation of the device management apparatus 50 in a cloud server (computer) configured to be capable of communicating with the heat source devices 10.

(2) Detailed Configuration

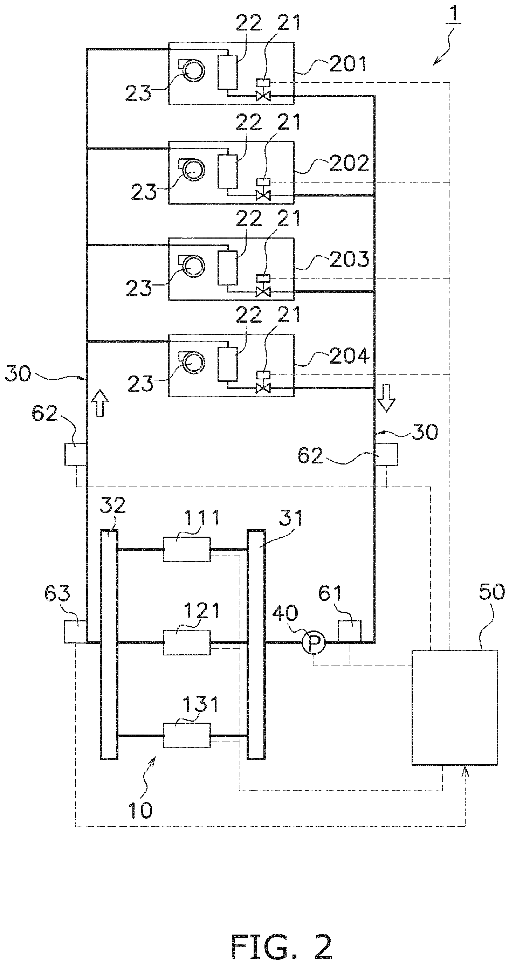

A description will be given here of a case where the device management apparatus 50 uses the temperature of the heat medium as a state value of the heat medium and prohibits a change operation of the capacity of the specific devices on the basis of a temperature change of the heat medium as a parameter related to a change in state value. In the description of a determination flow, a description will be given of a case where the three heat source devices 11, 12, and 13 are chillers. As illustrated in Fig. 2, in a case where the heat source devices 10 are chillers 111, 121, and 131, the heat medium is water, and cold water is fed from the chillers 111, 121, and 131 to the use-side device 20 through the flow path 30. The heat source system 1 includes an outlet temperature sensor 63 arranged downstream of the feed header 32. The outlet temperature sensor 63 detects the temperature of the cold water fed out of the feed header 32. The determination unit 52 receives the temperature of the cold water detected by the outlet temperature sensor 63 as a state value.

(2-1) Example Configuration of Heat Source System 1

A description will be given of a case where, as illustrated in Fig. 2, the use-side device 20 of the heat source system 1 includes four fan coil units 201, 202, 203, and 204. The fan coil units 201 to 204 cool spaces to be air conditioned (not illustrated) using cold water fed from the chillers 111, 121, and 131. Each of the fan coil units 201 to 204 includes a flow rate adjustment valve 21, an air heat exchanger 22, and a fan 23. The air heat exchanger 22 performs heat exchange between the cold water fed from the chillers 111, 121, and 131 and the air in the space to be air conditioned. The flow rate adjustment valve 21 adjusts the flow rate of the cold water to be caused to flow to the air heat exchanger 22. The fan 23 generates a flow of air that passes through the air heat exchanger 22.

The heat source system 1 includes an inlet temperature sensor 61, differential pressure sensors 62, and the outlet temperature sensor 63. The inlet temperature sensor 61 measures the return water temperature. The return water temperature is the temperature of water returning to the chillers 111, 121, and 131. The differential pressure sensors 62 measure a differential pressure between the pressure of cold water to be fed to the fan coil units 201 to 204 and the pressure of water returning from the fan coil units 201 to 204.

The pump 40 is inverter controlled and is configured to be capable of changing a discharge amount. The device management apparatus 50 controls the discharge amount of the pump 40 so that the differential pressure detected by the differential pressure sensors 62 is constant.

(2-2) Example Operation of Heat Source System 1

Each of the chillers 111, 121, and 131 includes therein a water heat exchanger (not illustrated) and a chiller controller (not illustrated). The respective chiller controllers of the chillers 111, 121, and 131 individually perform control for the chillers 111, 121, and 131 so that the outlet water temperature of each of the chillers 111, 121, and 131 becomes a set water temperature. The set water temperature is the temperature of the heat medium (water) sent out of a device that is in operation among the chillers 111, 121, and 131.

The operation of the heat source system 1 will be described taking as an example a case where the heat source system 1 is operated in a stable state with a set water temperature of 7°C and a return water temperature of 13°C. It is assumed that, in this stable state, the chiller 111 is in operation (in an on state) and the chillers 121 and 131 are at a stop (in an off state). It is also assumed that the chiller 111 is operated at a capacity of 50% of the maximum capacity in the stable state.

If the load of the fan coil units 201 to 204 rapidly increases, a larger amount of heat needs to be processed by the fan coil units 201 to 204. Accordingly, the fan coil units 201 to 204 open the flow rate adjustment valves 21 to allow a large amount of cold water to flow to the air heat exchangers 22. When the flow rate adjustment valves 21 are opened, the differential pressure detected by the differential pressure sensors 62 decreases. When the differential pressure sensors 62 detect such a decrease in differential pressure, the device management apparatus 50, which has received the detection result of the differential pressure sensors 62, performs control to increase the discharge amount of the pump 40 and return the differential pressure to the original state.

With the rapid increase in the load of the fan coil units 201 to 204, the chiller 111 needs to process a larger amount of heat and thus increases the capacity from 50% to 100%, for example. If the capacity of the chiller 111 is still insufficient even after the capacity of the chiller 111 reaches 100% (maximum capacity), for example, the return water temperature increases to 19°C, and the temperature of the cold water supplied from the chiller 111 increases to 12°C.

The device management apparatus 50 determines the number of heat source devices 10 to be operated from the capacity of the chiller 111 and the return water temperature. As described above, if the temperature of the cold water becomes higher than the set water temperature, the device management apparatus 50 causes the chiller 121 to also operate. The increase in the number of heat source devices 10 in operation is referred to as an increase in the number of operating devices. Conversely, the decrease in the number of heat source devices 10 in operation is referred to as a decrease in the number of operating devices. In the device management apparatus 50, on the basis of the determination result of the determination unit 52, the change operation prohibition unit 53 prohibits a change operation of the number of chillers in operation after the chiller 121 is additionally operated.

For example, with the additional operation of the chiller 121 described above, the water temperature of the cold water fed out of the feed header 32 changes from 12°C to 10°C, and the return water temperature also changes from 19°C to 16°C with the passage of time. With the further passage of time, for example, the water temperature of the cold water changes from 10°C to 8°C, and the return water temperature also changes from 16°C to 13°C. However, since the water temperature of the cold water fed out of the feed header 32, which is 8°C, is higher than a set temperature of 7°C, the heat source system 1 may also operate the chiller 131 additionally. In such a case, even if the chillers 111, 121, and 131 are operated at a capacity of 50%, the capacity of the heat source devices 10 becomes excessive, and the water temperature of the cold water fed out of the feed header 32 is likely to decrease to 6°C (a temperature lower than the set temperature). As described above, if the capacity of the heat source devices 10 becomes excessive, the heat source system 1 is likely to attempt to decrease the number of operating devices.

To prevent the capacity of the heat source devices 10 from becoming excessive due to the increase in the number of operating devices described above, the device management apparatus 50 takes the rate of change in outlet temperature in a certain time period and prohibits an increase in the number of operating devices in a transitional state in which the change is large.

(3) Determination Flow

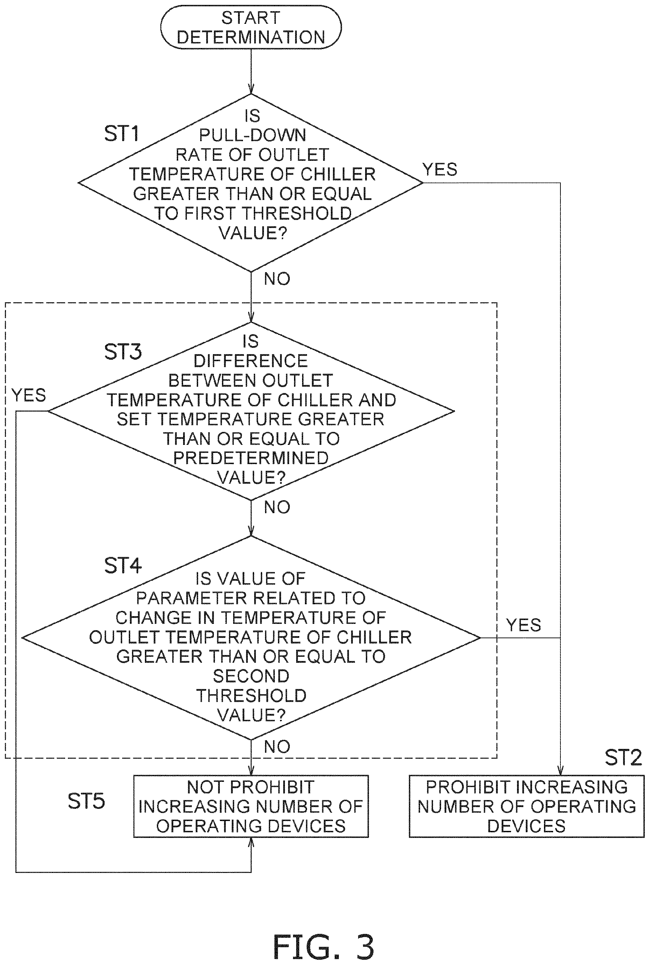

A determination flow performed by the determination unit 52 of the device management apparatus 50 will be described with reference to Fig. 3. The determination unit 52 performs pull-down rate control by using the temperature of the cold water. The determination unit 52 determines the pull-down rate of the outlet temperature of a chiller detected by the outlet temperature sensor 63. In the pull-down rate control, a determination is made based on a temperature change between two points, namely, the start point in time and the end point in time of a certain time period (hereinafter also referred to as a window). An example calculation formula of the pull-down rate is equation (1) as follows.

$$\text{Pull-down rate} = (\text{temperature at start point in time of window} - \text{temperature at end} $$
$$\text{point in time of window}) \div (\text{length of window}) \ ... \ (1)$$

The pull-down rate is expressed in [°C/minute], the temperature at the start point in time of the window and the temperature at the end point in time of the window are expressed in [°C], and the length of the window is expressed in [minute].

For example, if the temperature at the start point in time of the window is 12°C, the temperature at the end point in time of the window is 10°C, and the length of the window is 0.5 minutes (30 seconds), the pull-down rate is 4°C/minute. It is assumed that a preset first threshold value is 4°C/minute and that the first threshold value is stored in a memory (not illustrated) of the device management apparatus 50. The determination unit 52 reads the first threshold value from the memory and determines that the pull-down rate of the outlet temperature of the chiller is greater than or equal to the first threshold value (Yes in step ST1).

If the pull-down rate is greater than or equal to the first threshold value, the device management apparatus 50 prohibits additional operation of another chiller (step ST2).

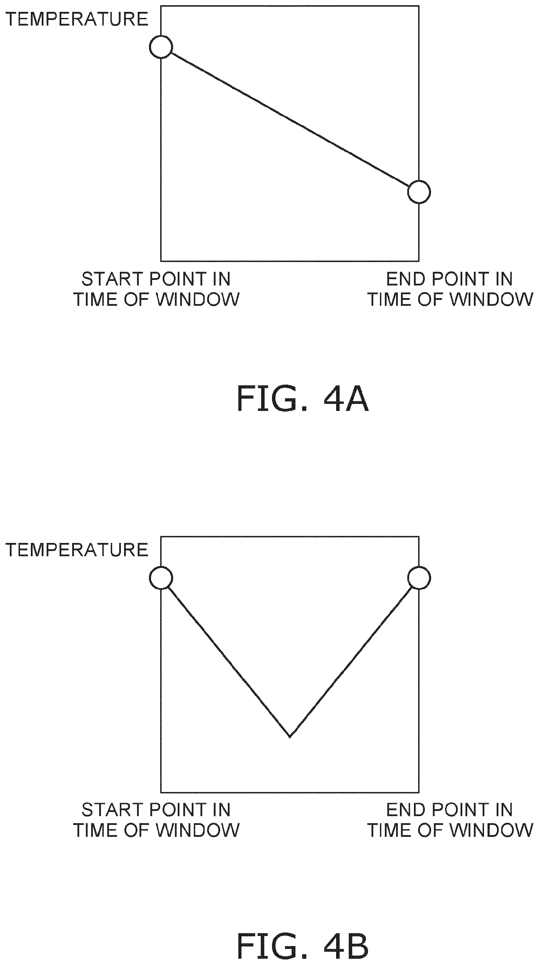

If the pull-down rate is less than the first threshold value (No in step ST1), there is a possibility that the transitional state has been eliminated, or there is possibility that the transitional state has not been eliminated. Fig. 4A illustrates a typical temperature change of the cold water after the number of operating devices is increased. The temperature change of the cold water illustrated in Fig. 4A is a monotonic decrease. However, as illustrated in Fig. 4B, the temperature of the cold water may oscillate after the number of operating devices is increased. If the temperature is oscillating, the determination unit 52 is more likely to be unable to perform appropriate determination. Consequently, if the temperature is oscillating, the change operation prohibition unit 53 is more likely to be unable to appropriately prohibit the change operation. For example, if the temperature at the start point in time of the window is 12°C and the temperature at the end point in time of the window is 12°C, the pull-down rate is 0°C/minute even if the temperature temporarily decreases to 10°C between the start point in time and the end point in time (even in a state in which the number of operating devices is to be increased).

To overcome the shortcoming of the pull-down rate control as described above, it is conceivable to reduce the length of the window (the time period from the start point in time to the end point in time). However, if the length of the window is reduced, the increase in the number of operating devices may be prohibited even for a gentle temperature change with oscillation, resulting in a failed increase in the number of operating devices at a timing when the number of operating devices is to be increased. Insufficient capacity of the chillers 111, 121, and 131 may provide discomfort to persons in the spaces to be air conditioned by the fan coil units 201 to 204.

A temperature oscillation as illustrated in Fig. 4B is determined to be a transitional state, which makes it more likely that better pull-down rate control can be performed. Accordingly, even if the pull-down rate is greater than or equal to the first threshold value, the determination unit 52 makes a determination in steps ST3 and ST4 not to prohibit increasing the number of operating devices.

If the temperature difference between the outlet temperature of the chiller and the set temperature is greater than or equal to a predetermined value (Yes in step ST3), the determination unit 52 determines that the increase in the number of operating devices is not to be prohibited (step ST5). The outlet temperature of the chiller is a temperature detected by the outlet temperature sensor 63 in the configuration in Fig. 2.

If the temperature difference between the outlet temperature of the chiller and the set temperature is less than the predetermined value (No in step ST3), the determination unit 52 determines a parameter indicating a change in temperature (state value) (step ST4). If the determination unit 52 determines that the value of the parameter indicating a change in temperature is greater than or equal to a second threshold value (Yes in step ST4), the change operation prohibition unit 53 prohibits increasing the number of operating devices (step ST2). Conversely, if the determination unit 52 determines that the value of the parameter indicating a change in temperature is less than the second threshold value (Yes in step ST4), the change operation prohibition unit 53 does not prohibit increasing the number of operating devices (step ST5).

To supply hot water, the determination unit 52 performs pull-up rate control. In the pull-up rate control, a determination is made based on a temperature change between two points, namely, the start point in time and the end point in time of a certain time period (window). An example calculation formula of the pull-up rate is equation (2) as follows.

$$\text{Pull-up rate} = (\text{temperature at end point in time of window} - \text{temperature at start point in time of window}) \div (\text{length of window}) \,...\,(2)$$

The pull-up rate is expressed in [°C/minute], the temperature at the start point in time of the window and the temperature at the end point in time of the window are expressed in [°C], and the length of the window is expressed in [minute].

For example, if the temperature at the start point in time of the window is 20°C, the temperature at the end point in time of the window is 22°C, and the length of the window is 0.5 minutes (30 seconds), the pull-up rate is 4°C/minute. It is assumed that a preset first threshold value is 4°C/minute and that the first threshold value is stored in a memory (not illustrated) of the device management apparatus 50. In this case, the determination unit 52 reads the first threshold value from the memory and determines that the pull-up rate of the outlet temperature of the chiller is greater than or equal to the first threshold value. If the pull-down rate is greater than or equal to the first threshold value, the device management apparatus 50 prohibits additional operation of another chiller.

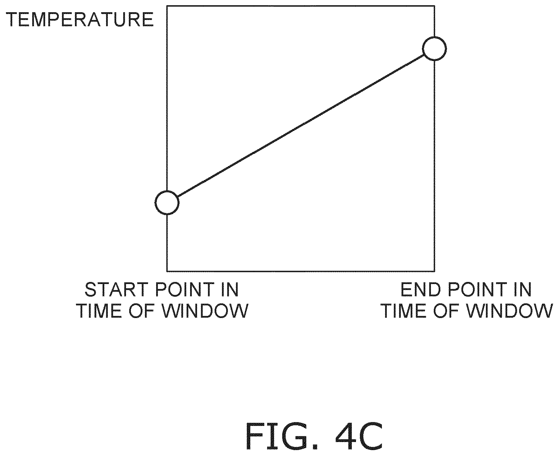

If the pull-up rate is less than the first threshold value, there is a possibility that the transitional state has been eliminated, or there is possibility that the transitional state has not been eliminated. Fig. 4C illustrates a typical temperature change of hot water after the number of operating devices is increased. The temperature change of the hot water illustrated in Fig. 4C is a monotonic increase. However, the temperature of the hot water may oscillate after the number of operating devices is increased. If the temperature is oscillating, the determination unit 52 is more likely to be unable to perform appropriate determination. Consequently, if the temperature is oscillating, the change operation prohibition unit 53 is more likely to be unable to appropriately prohibit the change operation.

A temperature oscillation is determined to be a transitional state, which makes it more likely that better pull-up rate control can be performed. Accordingly, even if the pull-up rate is greater than or equal to the first threshold value, the determination unit 52 makes a determination not to prohibit increasing the number of operating devices.

If the temperature difference between the outlet temperature of the chiller and the set temperature is greater than or equal to a predetermined value, the determination unit 52 determines that the increase in the number of operating devices is not to be prohibited.

If the temperature difference between the outlet temperature of the chiller and the set temperature is less than the predetermined value, the determination unit 52 determines a parameter indicating a change in temperature (state value). If the determination unit 52 determines that the value of the parameter indicating a change in temperature is greater than or equal to a second threshold value, the change operation prohibition unit 53 prohibits increasing the number of operating devices. Conversely, if the determination unit 52 determines that the value of the parameter indicating a change in temperature is less than the second threshold value, the change operation prohibition unit 53 does not prohibit increasing the number of operating devices.

(4) Parameter Related to Change in State Value

(4-1) Parameter Related to Change in Temperature

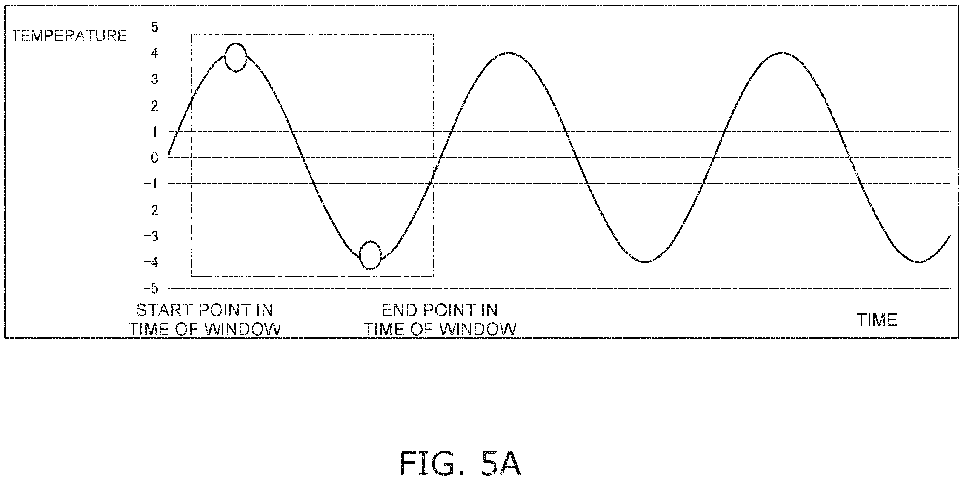

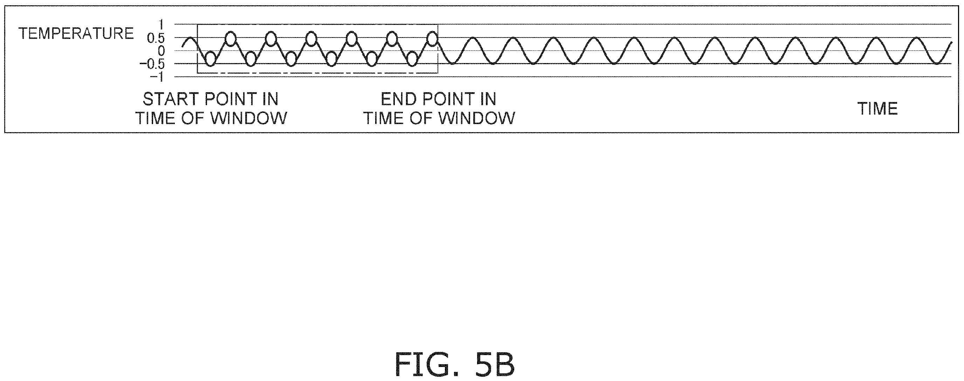

There are various patterns of change in temperature. Examples of the change in temperature include a gradual temperature change with large amplitudes and long periods (see Fig. 5A), and a fine temperature change with small amplitudes and short periods (see Fig. 5B). In Fig. 5A and Fig. 5B, the vertical axis represents temperature, and the horizontal axis represents time. Fig. 5A and Fig. 5B illustrate how the temperature changes up and down with respect to the center of the amplitude when oscillating.

A description will be given of a case where the determination unit 52 performs determination using the number of extreme values and the fluctuation range as parameters related to a change in temperature. The number of extreme values serving as a parameter related to a change in temperature is the number of extreme values occurring between the start point in time and the end point in time of the window. In the temperature change as illustrated in Fig. 5A, the number of extreme values is 2. In the temperature change as illustrated in Fig. 5B, the number of extreme values is 12. The fluctuation range serving as a parameter related to a change in temperature is the maximum fluctuation range occurring between the start point in time and the end point in time of the window. In the temperature change as illustrated in Fig. 5A, the fluctuation range is 8. In the temperature change as illustrated in Fig. 5B, the fluctuation range is 1.

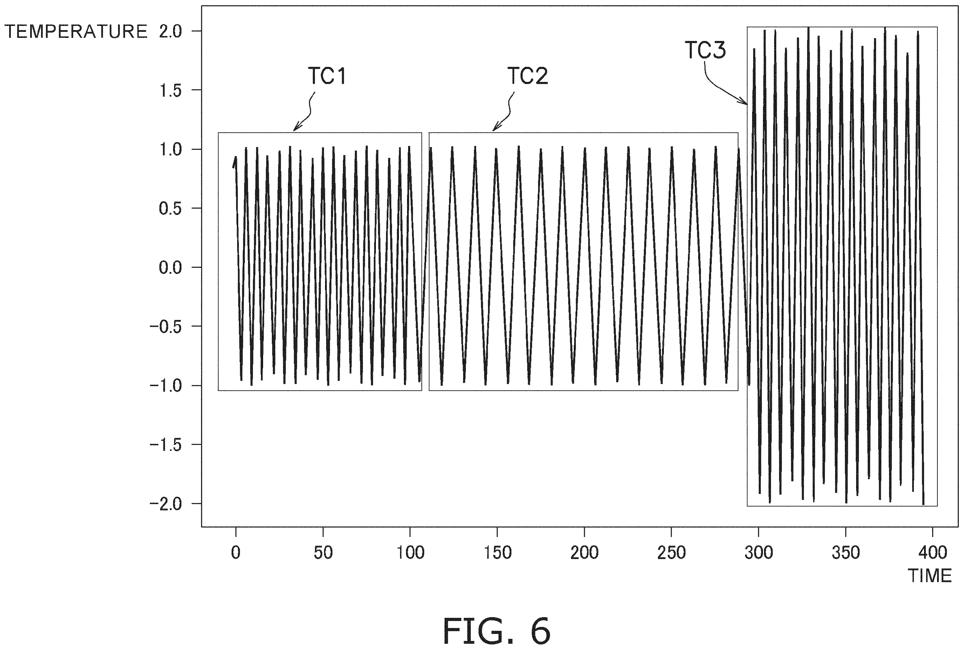

Fig. 6 illustrates three different temperature changes. In Fig. 6, the first temperature change TC1 finely oscillates with a medium fluctuation range, the second temperature change TC2 gently oscillates with a medium fluctuation range, and the last temperature change TC3 finely oscillates with a large fluctuation range. Multiplying the number of extreme values and the fluctuation range enables quantification of an increasing degree of oscillation in the order of the last temperature change TC3, the first temperature change TC1, and the second temperature change TC2 illustrated in Fig. 6.

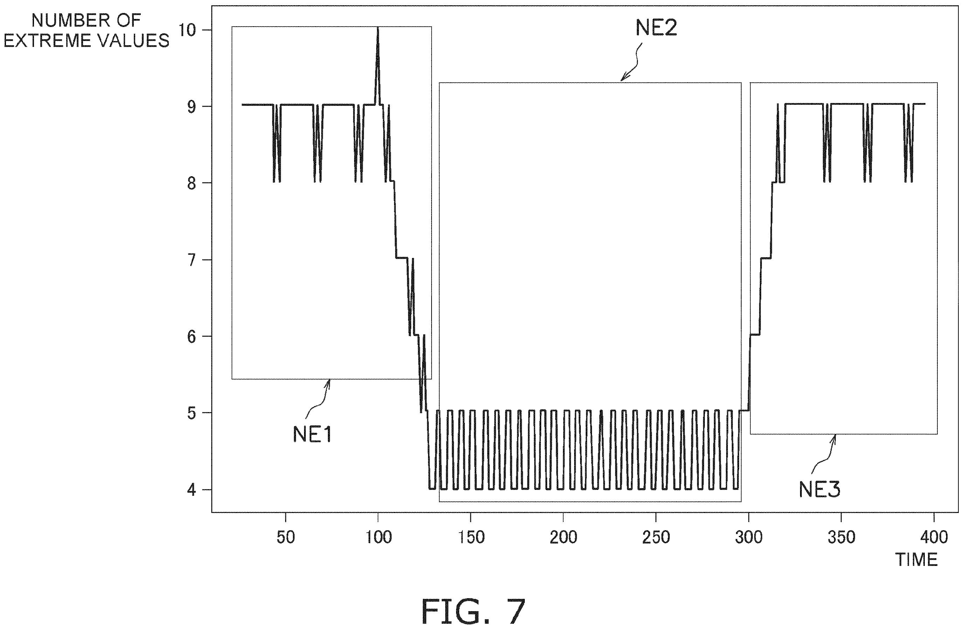

Fig. 7 illustrates the number of extreme values NE1 for the first temperature change TC1, the number of extreme values NE2 for the second temperature change TC2, and the number of extreme values NE3 for the last temperature change TC3. Referring to Fig. 7, it can be seen that the number of extreme values NE1 of the first temperature change TC1 and the number of extreme values NE3 for the last temperature change TC3 are relatively large, whereas the number of extreme values NE2 for the second temperature change TC2 is relatively small.

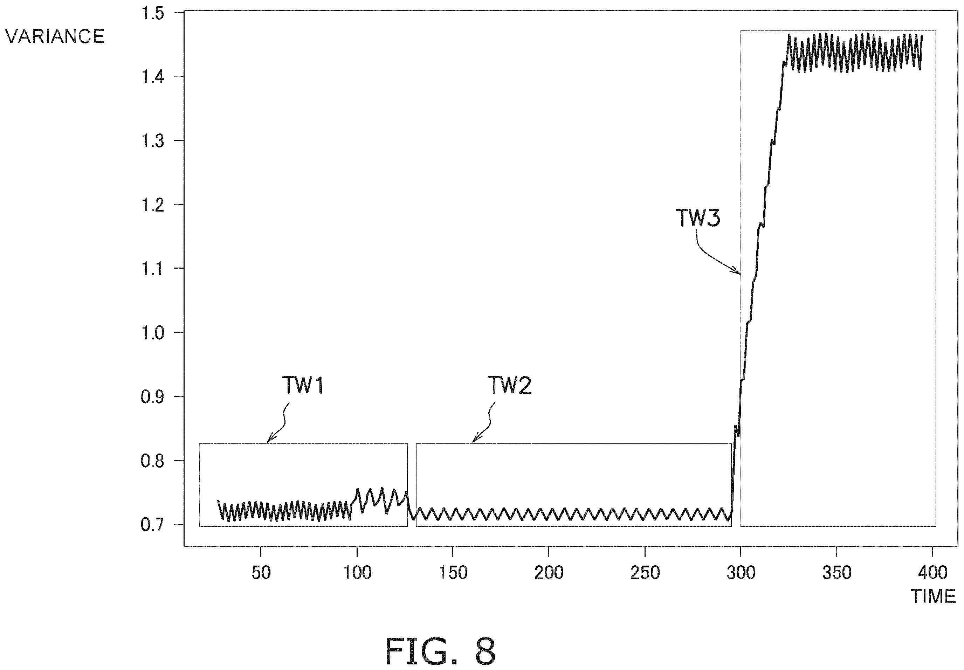

Examples of the variable corresponding to the fluctuation range include variance. Fig. 8 illustrates a variance Va1 for the first temperature change TC1, a variance Va2 for the second temperature change TC2, and a variance Va3 for the last temperature change TC3. Referring to Fig. 8, it can be seen that the variance Va1 of the first temperature change TC1 and the variance Va2 for the second temperature change TC2 are medium, whereas the variance Va3 for the last temperature change TC3 is relatively large.

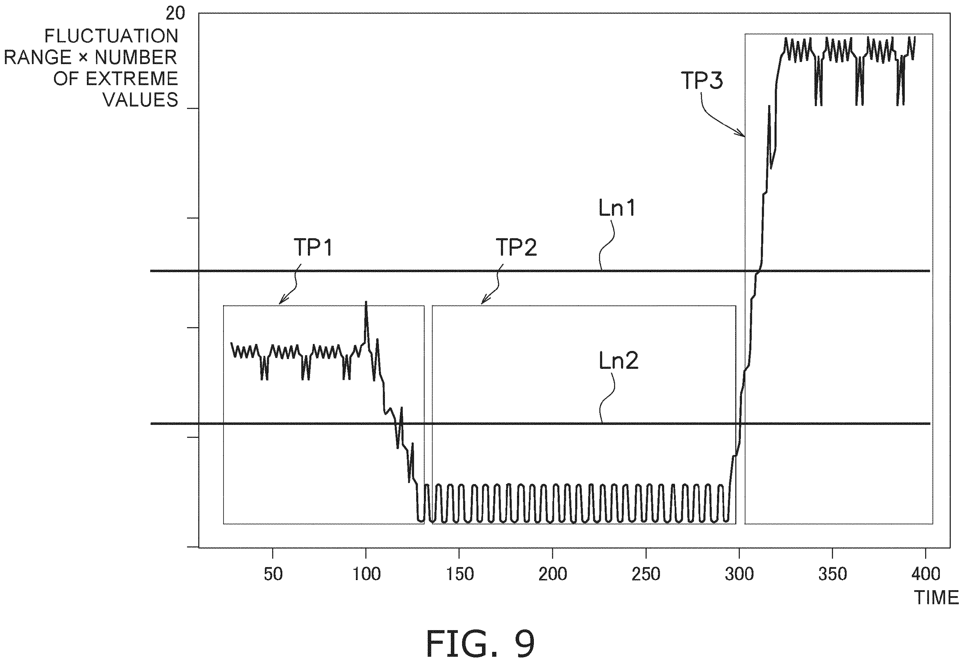

Here, the number of extreme values × variance represents a parameter value TP related to a change in temperature. Fig. 9 illustrates a parameter value TP1 related to the first temperature change TC1, a parameter value TP2 related to the second temperature change TC2, and a parameter value TP3 related to the last temperature change TC3.

(4-2) Method for Determining Second Threshold Value for Prohibition of Increasing Number of Operating Devices

The second threshold value for determining prohibition of increasing the number of operating devices is determined from, for example, data in a trial operation period. In the production-model trial operation period, the change in temperature detected by the outlet temperature sensor 63, a parameter value TP related to a change in temperature, and a change in the number of devices in operation are observed. For example, if hunting is observed for the parameter value TP3 and no hunting is observed for the parameter values TP1 and TP2, the second threshold value is set to a value indicated by a straight line Ln1 in Fig. 9. These satisfies the relationship of the parameter values TP1 and TP2 < the value indicated by the straight line Ln1 < the parameter value TP3. For example, if hunting is observed for the parameter values TP2 and TP3 and no hunting is observed for the parameter value TP1, the second threshold value is set to a value indicated by a straight line Ln2 in Fig. 9. These satisfies the relationship of the parameter value TP1 < the value indicated by the straight line Ln2 <the parameter values TP2 and TP3.

(5) Features

(5-1) The device management apparatus 50 described above receives the temperature of cold water, which is the state value of the heat medium measured by the outlet temperature sensor 63 included in the heat source system 1. The device management apparatus 50 prohibits a change in the number of devices in operation, which is the change operation of the capacity of the chillers 111, 121, and 131 serving as specific devices, on the basis of a parameter related to a change in temperature. As described above, with a simple configuration including the determination unit 52 that determines whether to prohibit a change operation of the capacity on the basis of a parameter related to a temperature change, the device management apparatus 50 can reduce extra change operations of the capacity of the chillers 111, 121, and 131.

(5-2) The device management apparatus 50 described above uses, as parameters related to a change in state value, variables related to the number of extreme values of the state value and the fluctuation range of the state value within a window, which is a predetermined period. The number of extreme values or the fluctuation range of the state value may be used as a parameter related to a change in state value. Using, as a parameter related to a change in state value, a variable related to at least one of the number of extreme values of the state value and the fluctuation range of the state value, the device management apparatus 50 can reduce unnecessary change operations in a situation where the state value is unstable.

(5-3) The device management apparatus 50 described above uses, as parameters related to a change in state value, variables related to the number of extreme values of the state value and the variance of the state value within a window, which is a predetermined period. As a result, as described with reference to Fig. 9, the device management apparatus 50 described above can accurately suppress unnecessary operations in accordance with the behavior of fluctuations in the state value.

(5-4) As described with reference to Fig. 9, the device management apparatus 50 described above determines the second threshold value, which is a threshold value of a parameter indicating a limit for prohibiting a change operation of the capacity of the specific devices, from a relationship between the value of the parameter and the number of times the capacity of the specific devices is changed. As a result, it is possible to easily prohibit the change operation of the capacity of the specific devices at an appropriate timing by using the second threshold value indicated by the straight line Ln1 or Ln2 in Fig. 9.

(5-5) In the device management apparatus 50, the notification unit 54 can notify whether the device management apparatus 50 is in a state in which the change operation is prohibited or in a state in which the change operation is not prohibited, and inform outside of the management state. With this notification, it is possible to inform outside of the period of transition during which the change of the capacity is prohibited, which makes it easier for the user or the like to allow adjustment of the capacity of the heat source system 1.

(5-6) A sensor included in the heat source system 1 to measure the state of the heat medium can be implemented as a temperature sensor that measures the temperature of the heat medium, such as the outlet temperature sensor 63, a flow rate sensor that measures the flow rate of the heat medium, or a pressure sensor that measures the pressure of the heat medium. With a simple configuration in which the value of the temperature, flow rate, or pressure of the heat medium measured by such a sensor is used as the state value of the heat medium, the heat source system 1 can reduce extra change operations of the capacity of the specific devices.

(5-7) In a case where the outlet temperature sensor 63 is used in the heat source system 1 to measure the state of the heat medium, the heat source system 1 can perform an appropriate change operation of the capacity when the difference between the outlet temperature and the target temperature is large and the capacity is to be changed.

(6) Modifications

(6-1) Modification 1A

In the embodiment described above, the description has been given of a case where the heat medium is water. However, the heat medium is not limited to water. The heat medium may be, for example, brine, refrigerant, or oil.

(6-2) Modification 1B

In the embodiment described above, the description has been given of the chillers 111, 121, and 131 as specific devices. However, the specific devices are not limited to chillers. The specific devices may be, for example, the heat source devices 10 other than chillers. The heat source devices 11, 12, and 13 can be three cooling towers instead of the three chillers 111, 121, and 131. In this case, for example, a chiller in which cooling water of the cooling towers circulates is the use-side device 20. Alternatively, the specific devices may be devices other than the heat source devices 10. Examples of a specific device other than the heat source devices 10 include the pump 40 of the heat source system 1. For example, in a case where the pump 40 includes a plurality of constant-speed pumps, the change operation of the capacity to be prohibited by the change operation prohibition unit 53 of the device management apparatus 50 is to increase or decrease the number of operating devices among the plurality of constant-speed pumps.
In a case where the specific devices are the chillers 111, 121, and 131, cooling towers, or pumps, it is possible to reduce extra change operations of the capacity of the chillers 111, 121, and 131, the cooling towers, or the pumps with a simple configuration.

(6-3) Modification 1C

In the embodiment described above, the description has been given of a case where the state value of the heat medium is the temperature. However, the state value may be a value other than the temperature. For example, the flow rate of cold water flowing through the flow path 30 of the heat source system 1 may be used as the state value, and the flow path 30 may be provided with a flow rate sensor. Alternatively, the pressure of cold water flowing through the flow path 30 of the heat source system 1 may be used as the state value, and the flow path 30 may be provided with a pressure sensor. In a case where the flow rate or the pressure is used as the state value, the specific devices are, for example, the heat source devices 10 or the pump 40. In a case where the flow rate or the pressure is used as the state value, a flow rate sensor or a pressure sensor is used instead of the inlet temperature sensor 61 and the outlet temperature sensor 63.

(6-4) Modification 1D

In the embodiment described above, the description has been given of a case where a parameter related to a change in state value is a variable related to at least one of the number of extreme values of the state value and the fluctuation range of the state value. However, the parameter related to a change in state value is not limited to the variable related to at least one of the number of extreme values of the state value and the fluctuation range of the state value. The device management apparatus 50 can use, for example, a period, a frequency, or a wavelength, instead of the number of extreme values, as a parameter related to a change in state value. The device management apparatus 50 can use, for example, a standard deviation, a difference between a maximum value and a minimum value, or an amplitude, instead of the variance, as a parameter related to a change in state value.

<Second Embodiment>

(1) Overall Configuration

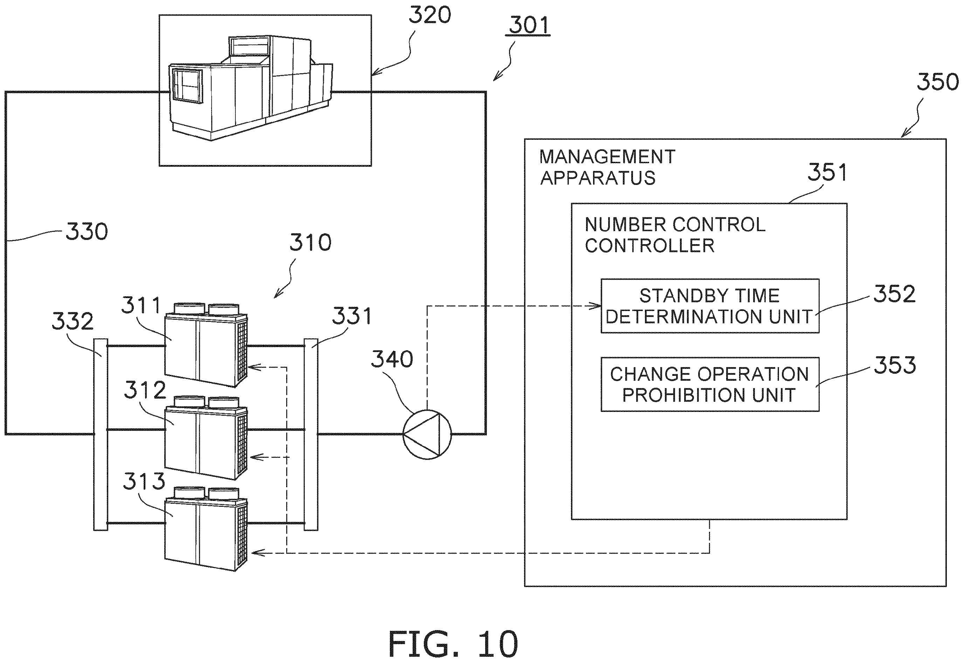

As illustrated in Fig. 10, a heat source system 301 according to a second embodiment includes heat source devices 310, a use-side device 320, a flow path 330, a pump 340, and a device management apparatus 350. The heat medium of the heat source system 301 circulates between the heat source devices 310 and the use-side device 320 through the flow path 330. The flow path 330 includes a return header 331 and a feed header 332. Water fed out of the pump 340 is distributed to heat source devices 311 to 313 by the return header 331. Cold water exiting from the heat source devices 311 to 313 is mixed by the feed header 332 and fed to the use-side device 320. The heat source system 301 according to the second embodiment includes the three heat source devices 311, 312, and 313.
The device management apparatus 350 manages the heat source devices 310. The device management apparatus 350 has a function of determining a standby time. The device management apparatus 350 prohibits a change operation for changing the capacity of the heat source devices 310 for a predetermined period from the previous change operation. The length of the predetermined period during which the change operation of the capacity of the heat source devices 310 is prohibited is the standby time. The device management apparatus 350 determines the standby time in accordance with a parameter relating to the circulation flow rate of the heat medium. The device management apparatus 350 prohibits the change operation of the capacity of the heat source devices 310 during the standby time. In other words, the device management apparatus 350 allows the change operation of the capacity of the heat source devices 310 after the lapse of the standby time. In this embodiment, the change operation to be prohibited by the device management apparatus 350 is an operation of changing the number of heat source devices 310 that are in operation.

The device management apparatus 350 includes a number control controller 351 for performing number control of the heat source devices 310. The number control controller 351 includes a standby time determination unit 352 and a change operation prohibition unit 353. The standby time determination unit 352 calculates a standby time by using the parameter relating to the circulation flow rate of the heat medium. The change operation prohibition unit 353 prohibits the change operation of the capacity of the heat source devices 310 only during the standby time to suppress the change of the capacity of the heat source devices 310 in the transitional state.

The device management apparatus 350 is implemented by, for example, a computer. Fig. 10 illustrates various functional blocks of the device management apparatus 350 implemented by a control calculation device.

(2) Detailed Configuration

(2-1) Example Configuration of Heat Source System 301

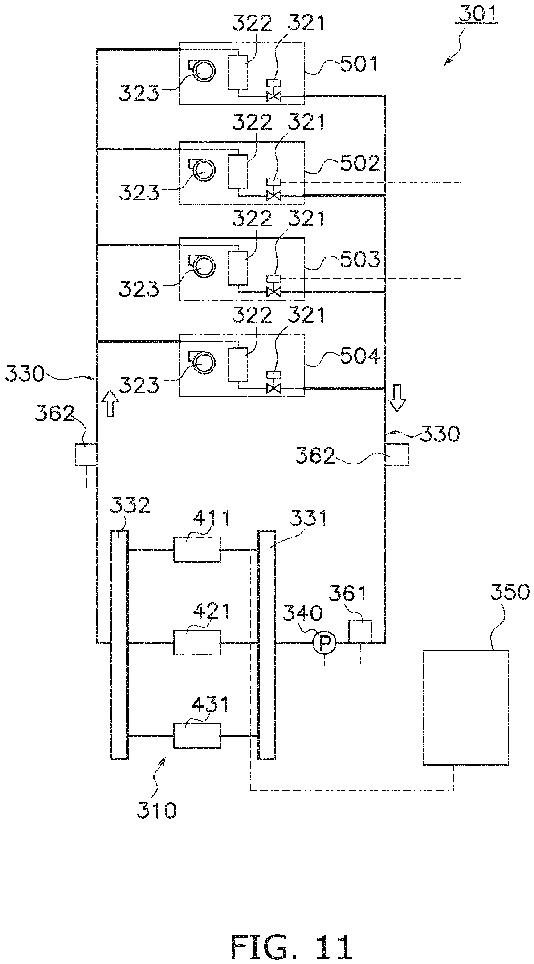

In the heat source system 301 illustrated in Fig. 11, the heat medium is water, the heat source devices 311, 312, and 313 are chillers 411, 421, and 431, and the use-side device 320 includes four fan coil units 501, 502, 503, and 504. The components included in the heat source system 301 are components having functions similar to those of the components of the heat source system presented in the first embodiment. Each of the fan coil units 501 to 504 includes a flow rate adjustment valve 321, an air heat exchanger 322, and a fan 323. The heat source system 301 includes an inlet temperature sensor 361 and differential pressure sensors 362. The pump 340 is inverter controlled and is configured to be capable of changing the discharge amount. The device management apparatus 350 controls the discharge amount of the pump 340 so that a differential pressure detected by the differential pressure sensors 362 is constant.

(2-2) Example Operation of Heat Source System 301

Each of the chillers 411, 421, and 431 includes therein a water heat exchanger (not illustrated) and a chiller controller (not illustrated). The respective chiller controllers of the chillers 411, 421, and 431 individually perform control for the chillers 411, 421, and 431 so that the outlet water temperature of each of the chillers 411, 421, and 431 becomes a set water temperature.

The device management apparatus 350 determines the number of heat source devices 310 to be operated from the capacity of the chiller 411 and the return water temperature. If the temperature of the cold water becomes higher than the set water temperature, the device management apparatus 350 causes the chiller 421 to also operate. In the device management apparatus 350, the standby time determination unit 352 determines the standby time after the operation of the chiller 421 is started. To determine the standby time, the device management apparatus 350 acquires the parameter relating to the circulation flow rate of the heat medium and changes the standby time in accordance with the flow rate of the water flowing through the flow path 330. The parameter relating to the circulation flow rate will be described below.

For example, the heat source system 301 having a reference flow rate of 100 liters/minute and a reference standby time of 60 seconds will be described as an example. With the heat source system 301 having such a configuration, when the flow rate after the operation of the chiller 421 is started is larger than the reference flow rate and is 200 liters/minute, the device management apparatus 350 can be configured to determine the standby time to be 30 seconds (= 60 $\times$ 100/200). Conversely, when the flow rate after the number of operating devices is increased is less than the reference flow rate and the flow rate after the chiller 421 is additionally operated is 50 liters/minute, the device management apparatus 350 can be configured to determine the standby time to be 120 seconds (= 60 $\times$ 100/50). Here, for ease of description, the description has been given of a case where the flow rate is used as a parameter related to the circulation flow rate of the heat medium. However, the flow rate is not necessarily computed to determine the standby time by using the flow rate as a parameter. For example, a table indicating a relationship between the flow rate and the standby time may be prepared in advance, and the flow rate may be matched against the table to determine the standby time.

In the device management apparatus 350, the change operation prohibition unit 353 prohibits the change operation of the number of chillers in operation during the standby time after the chiller 421 is additionally operated. After the lapse of the standby time, the device management apparatus 350 causes the chiller 431 to operate if the capacity is still insufficient, or causes the chiller 411 or the chiller 421 to stop operating, conversely, if the capacity is excessive.

If the standby time is excessively long after the number of operating devices is increased, the additional operation of the chiller 431 or stopping the operation of the chiller 411 or 421 after the operation of the chiller 421 is started is delayed. If the additional operation of the chiller 431 is delayed, the capacity of the fan coil units 501 to 504 often becomes insufficient. If the capacity of the fan coil units 501 to 504 becomes insufficient, the temperatures of the spaces to be air conditioned do not drop easily, which provides discomfort to people in the spaces to be air conditioned.

If the standby time is excessively short after the number of operating devices is increased, the additional operation of the chiller 431 or stopping the operation of the chiller 411 or 421 after the operation of the chiller 421 is started is accomplished too early. If the additional operation of the chiller 431 is accomplished too early, the capacity of the heat source devices 310 often becomes excessive. The excessive capacity of the heat source devices 310 leads to extra energy consumption.

Consideration will be given to the decrease in the number of operating devices when the chillers 411, 421, and 431 are operated and the operation of the chiller 431 is stopped. If the standby time is excessively short after the decrease in the number of operating devices described above, stopping the operation of the chiller 411 or 421 or the additional operation of the chiller 431 after the operation of the chiller 431 is stopped is accomplished too early. If stopping the operation of the chiller 411 or 421 is accomplished too early, the capacity of the heat source devices 310 often becomes too low. The too low capacity of the heat source devices 310 causes repeating the start and stop of the heat source devices 310 (in this case, one of the chillers 411 and 421).

If the standby time is excessively long after the number of operating devices is decreased, stopping the operation or the additional operation of the chiller 411 or 421 of the chiller 431 after the chiller 431 is stopped is delayed. If stopping of the operation of the chiller 411 or 421 is delayed, the capacity of the heat source devices 310 often becomes excessive. The excessive capacity of the heat source devices 310 leads to extra energy consumption.

An appropriate standby time, which prevents the increase or decrease in the number of operating devices from being accomplished too early or too late, is considered to be a time taken to stabilize the water temperature state in the pipe. Therefore, it is preferable that the standby time dynamically changes in accordance with, for example, the velocity of the flow in the pump 340 and the response of the chillers 411, 421, and 431. For example, it is assumed that the water temperature of the cold water fed out of the feed header 332 changes from 13°C to a set water temperature of 7°C with the additional operation of the chiller 421 described above. Then, the cold water having the set water temperature returns to the pump 340 again, and the influence of the change of the temperature of the cold water at the feed header 332 to 7°C is reflected in the return water temperature. To prevent the standby time from being excessively short, the standby time is preferably set to be longer than a circulation time that is taken until the water exiting from the pump 340 returns to the pump 340 again. The standby time has a tendency that the large circulation flow rate reduces the circulation time and thus reduces the standby time, whereas the small amount of circulation increases the circulation time and thus also increases the standby time.

During the standby time, for example, since the return water temperature is as high as 20°C, the chillers 411 and 421 are operated at a capacity of 80% of the maximum capacity, and the water temperature of the cold water fed out of the feed header 332 is lowered to 10°C. At this time, the temperature of the cold water entering the fan coil units 501 to 504 is still kept at 13°C, and the temperature of the water immediately after leaving the fan coil units 501 to 504 is still as high as 20°C.

After the lapse of the standby time, for example, the return water temperature decreases to 13°C, and the chillers 411 and 421 are operated at a capacity of 60% of the maximum capacity. At this time, the water temperature of the cold water at the feed header 332 and the temperature of the cold water entering the fan coil units 501 to 504 also have a set temperature of 7°C, and the water immediately after leaving the fan coil units 501 to 504 has a temperature of 13°C.

(2-3) Parameter Relating to Circulation Flow Rate

Examples of the parameter relating to the circulation flow rate may include the capacity of the pump 340. For example, if the pump 340 is inverter controlled, the frequency of the pump 340 after the increase in the number of operating devices relative to the maximum frequency can be used as a parameter. For example, if the reference frequency is 50%, the flow rate is increased when the frequency of the pump 340 is 80%, so that the standby time is controlled to be reduced, and the flow rate is decreased when the frequency is 20%, so that the standby time is controlled to be increased. However, the parameter indicating the capacity of the pump 340 is not limited to the frequency and may be any other parameter such as the number of revolutions or the amount of discharge determined from a pump characteristic curve. For example, the device management apparatus 350 may store a relationship between the capacity of the pump 340 and the standby time in the form of a table. Such a table can be created by, for example, production-model measurement performed in advance.

For example, in a case where the pump 340 is configured such that a plurality of constant-speed pumps each having a constant number of revolutions are connected in parallel, the number of constant-speed pumps in operation can be changed to adjust the flow rate. With such a configuration, the device management apparatus 350 can use the number of constant-speed pumps that are in operation as a parameter relating to the circulation flow rate.

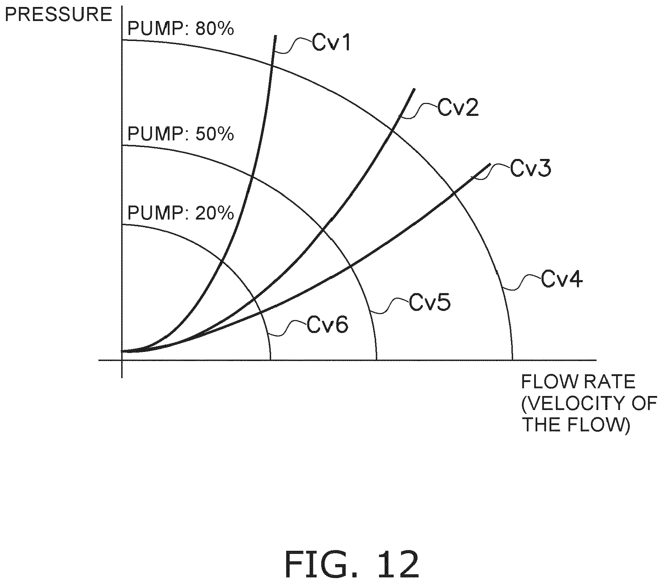

Other examples of the parameter relating to the circulation flow rate may include the capacity of the pump 340 and the resistance of the pipe. For example, the valve opening degrees of the flow rate adjustment valves 321 of the fan coil units 501 to 504 and the frequency of the pump 340 may be used as parameters relating to the circulation flow rate. A curve Cv1 illustrated in Fig. 12 is a curve indicating the relationship between the pressure and the flow rate in a case where the pipe resistance is large due to, for example, small valve opening degrees of the flow rate adjustment valves 321 of the fan coil units 501 to 504. A curve Cv2 illustrated in Fig. 12 is a curve indicating the relationship between the pressure and the flow rate in a case where the pipe resistance is medium due to, for example, medium valve opening degrees of the flow rate adjustment valves 321 of the fan coil units 501 to 504. A curve Cv3 illustrated in Fig. 12 is a curve indicating the relationship between the pressure and the flow rate in a case where the pipe resistance is small due to, for example, fully open valve opening degrees of the flow rate adjustment valves 321 of the fan coil units 501 to 504. A curve Cv4 illustrated in Fig. 12 is a curve indicating the relationship between the pressure and the flow rate when the operation frequency of the pump 340 is 80% of the maximum frequency. A curve Cv5 illustrated in Fig. 12 is a curve indicating the relationship between the pressure and the flow rate when the operation frequency of the pump 340 is 50% of the maximum frequency. A curve Cv6 illustrated in Fig. 12 is a curve indicating the relationship between the pressure and the flow rate when the operation frequency of the pump 340 is 20% of the maximum frequency. For example, when the frequency of the pump 340 is 50% and the pipe resistance is medium, the flow rate of the cold water flowing through the flow path 30 is a flow rate corresponding to the point of intersection of the curve Cv2 and the curve Cv5. The device management apparatus 350 may store the relationship among the capacity of the pump 340, the resistance of the pipe, and the standby time in the form of a table, for example. Such a table can be created by, for example, production-model measurement performed in advance.

In a case where the pump 340 includes constant-speed pumps, the resistance of the pipe may be used as a parameter relating to the circulation flow rate. For example, the device management apparatus 350 may store the relationship between the resistance of the pipe and the standby time in the form of a table. Such a table can be created by, for example, production-model measurement performed in advance.

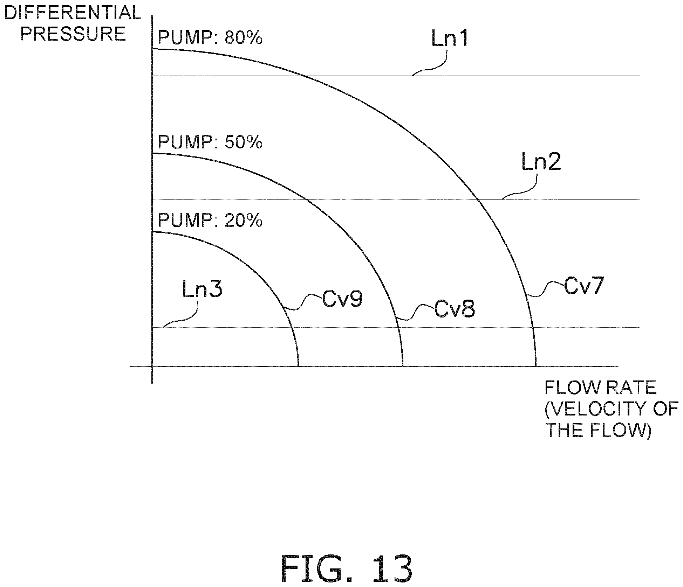

The capacity of the pump 340 and the differential pressure may also be used as parameters relating to the circulation flow rate. The differential pressure can be detected by the differential pressure sensors 362. A curve Ln1 illustrated in Fig. 13 is a curve indicating the relationship between the differential pressure and the flow rate in a case where the pipe resistance is large. A curve Ln2 is a curve indicating the relationship between the differential pressure and the flow rate in a case where the pipe resistance is medium. A straight line Ln3 is a curve indicating the relationship between the differential pressure and the flow rate in a case where the pipe resistance is small. A curve Cv7 illustrated in Fig. 13 is a curve indicating the relationship between the differential pressure and the flow rate when the operation frequency of the pump 340 is 80% of the maximum frequency. A curve Cv8 is a curve indicating the relationship between the differential pressure and the flow rate when the operation frequency of the pump 340 is 50% of the maximum frequency. A curve Cv9 is a curve indicating the relationship between the differential pressure and the flow rate when the operation frequency of the pump 340 is 20% of the maximum frequency. For example, when the frequency of the pump 340 is 50% and the pipe resistance is medium, the flow rate of the cold water flowing through the flow path 30 is a flow rate corresponding to the point of intersection of the straight line Ln2 and the curve Cv8. For example, the device management apparatus 350 may store the relationship among the capacity of the pump 340, the differential pressure, and the standby time in the form of a table. Such a table can be created by, for example, production-model measurement performed in advance. The differential pressure is, for example, a differential pressure detected by the differential pressure sensors 362.

In a case where the pump 340 includes constant-speed pumps, the differential pressure may also be used as a parameter relating to the circulation flow rate. For example, the device management apparatus 350 may store the relationship between the differential pressure and the standby time in the form of a table. Such a table can be created by, for example, production-model measurement performed in advance.

The standby time determination unit 352 can determine the standby time by using the relationship between the flow rate of the pump 340 and the retained amount of water. The retained amount of water circulating through the heat source system 301 can be determined, for example, when the heat source system 301 is designed. The determined retained amount of water is stored in a memory (not illustrated) of the device management apparatus 350. In such a case, the retained amount of water is a value described in the design specification. Alternatively, the retained amount of water can be calculated using the pipe length and the pipe cross-sectional area described in the drawing of the heat source system 301.

The flow rate can be determined from a pump characteristic curve and a pipe resistance curve. To easily determine the flow rate, the relationship among the frequency of the pump 340 or the number of pumps in operation, the flow rate adjustment valves 321 of the fan coil units 501 to 504, and the flow rate is measured during trial operation and stored in the memory of the device management apparatus 350 as a table. For example, if the retained amount of water is 100 liters and the flow rate is 100 liters/minute, the standby time can be calculated to be 1 minute from the computation of 100 liters ÷ 100 liters/minute. This is a time (circulation time) taken for water to circulate once through the heat source system 301. In consideration of the response characteristics of the heat source devices 310, the standby time may be set to be slightly longer than the circulation time. The standby time determination unit 352 may be configured to set the standby time by, for example, multiplying the circulation time by a correction coefficient.

(3) Modifications

(3-1) Modification 2A

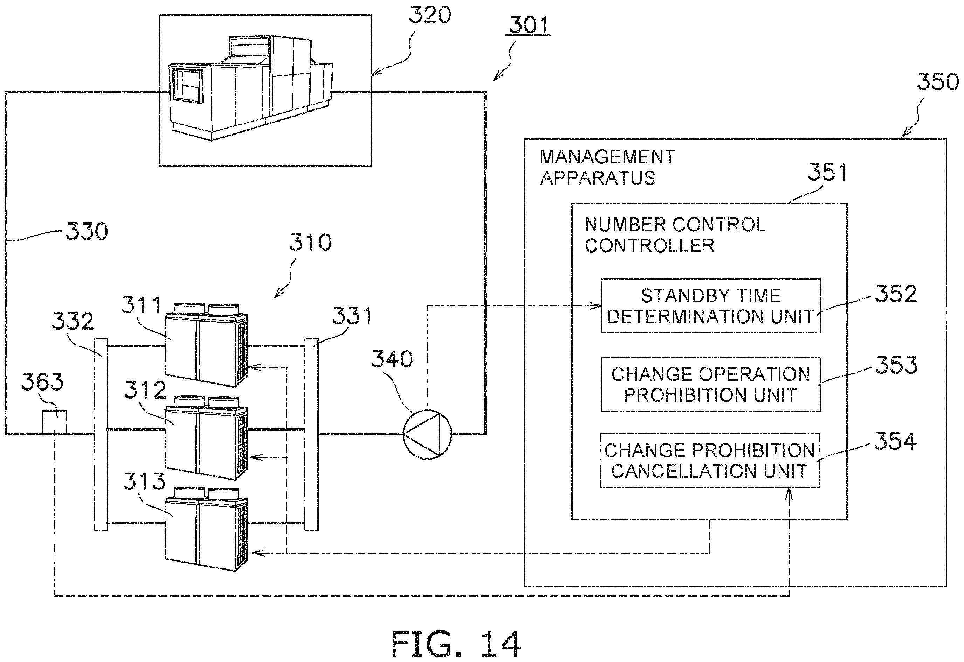

The heat source system 301 according to the second embodiment described above prohibits the change operation at all times during the standby time. However, the device management apparatus 350 may be configured such that the prohibition of the change operation can be canceled even during the standby time if a predetermined condition is satisfied. The heat source system 301 illustrated in Fig. 14 includes an outlet temperature sensor 63 that detects the temperature of the cold water fed out of the feed header 332. The device management apparatus 350 illustrated in Fig. 14 includes the standby time determination unit 352, the change operation prohibition unit 353, and a change prohibition cancellation unit 354. When the difference between the outlet temperature measured by the outlet temperature sensor 63 and the target temperature is larger than a predetermined value, the change prohibition cancellation unit 354 cancels the prohibition of the change operation of the capacity of the heat source devices 310 to change the temperature of the heat medium. For example, in a case where the outlet temperature is 15°C although the set temperature, which is the target temperature, is 7°C, the capacity of the heat source devices 310 is obviously insufficient. At this time, if only the chiller 411 is in operation, it is preferable to make a change to bring the chiller 421 into operation and also bring the chiller 431 into operation as quickly as possible. Setting the predetermined value to, for example, 14°C allows the change prohibition cancellation unit 354 to quickly shift from a state in which only the chiller 411 is in operation to a state in which all of the three chillers 411, 421, and 431 are in operation, in response to the outlet temperature sensor 63 detecting an outlet temperature of 15°C, even during the standby time.

(3-2) Modification 2B

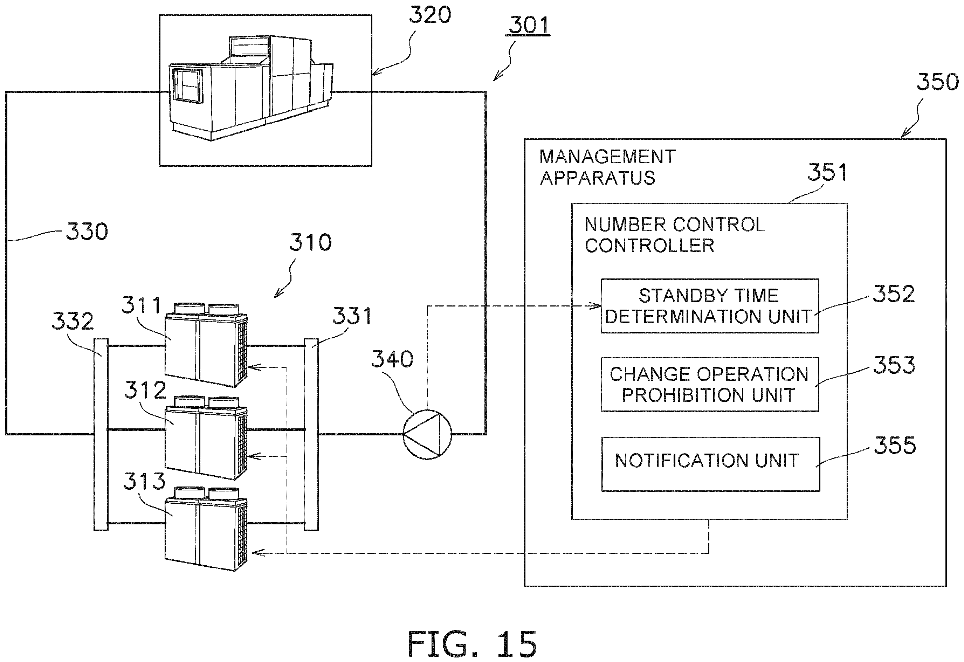

As illustrated in Fig. 15, the device management apparatus 350 of the heat source system 301 according to Modification 2B includes a notification unit 355. In the device management apparatus 350, the notification unit 355 notifies whether the device management apparatus 350 is in a state in which the change operation is prohibited or in a state in which the change operation is not prohibited. Examples of the notification method performed by the notification unit 355 include a method of notifying a state in which the change operation is prohibited by using a buzzer, a method of notification by displaying, on a display device, whether to prohibit the change operation, and method of transmitting information indicating whether to provide notification via a public line.

(3-3) Modification 2C

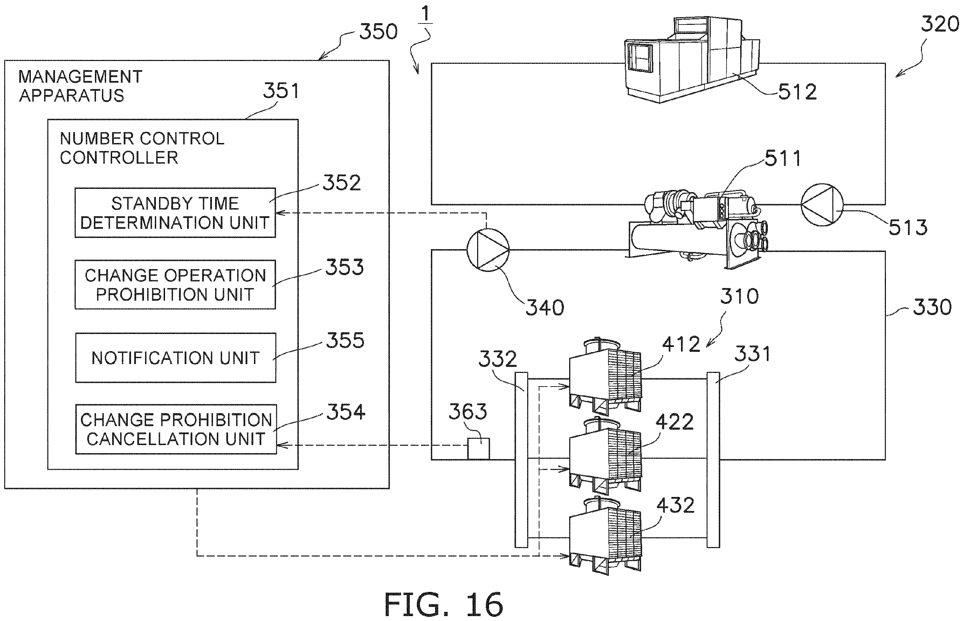

The heat source system 301 according to the embodiment described above has been described taking as an example a case where the heat source devices 311, 312, and 313 are the chillers 411, 421, and 431. However, the heat source devices 311, 312, and 313 are not limited to chillers. Examples of the heat source devices 311, 312, and 313 include cooling towers 412, 422, and 432, as illustrated in Fig. 16. The heat source system 301 illustrated in Fig. 16 includes the cooling towers 412, 422, and 432 serving as the heat source devices 310, the flow path 330, the pump 340, and the use-side device 320. Cooling water is circulated by the pump 340 between the cooling towers 412, 422, and 432 and the use-side device 320 through the flow path 330. The use-side device 320 includes a chiller 211, an air handling unit 212, and a pump 213. The operation of the use-side device 320 has been described in the embodiment, and the description thereof will thus be omitted here. The cooling water circulating through the flow path 330 is used in the chiller 211 to cool the cold water circulated by the pump 213 through the use-side device 320.

In the heat source system 301 in Fig. 16, the cooling water is circulated through the flow path 330 as a heat medium by the pump 340. In the steady state of the heat source system 301, for example, the temperature of the cooling water at the inlet of the chiller 211 is 20°C, and the temperature of the cooling water at the outlet of the chiller 211 is 26°C. The pump 340 changes the frequency so that the temperature difference of the cooling water between the inlet and outlet of the chiller 211 becomes a target temperature difference. If the temperature difference of the cooling water between the inlet and the outlet is larger than the target temperature difference, the heat source system 301 increases the frequency of the pump 340. Conversely, if the temperature difference of the cooling water between the inlet and the outlet is smaller than the target temperature difference, the heat source system 301 decreases the frequency of the pump 340.

The heat source system 301 changes the number of cooling towers 412, 422, and 432 in accordance with the temperature of the cooling water at the outlet of the feed header 332. For example, if the set temperature of the cooling water at the outlet of the feed header 332 is 20°C and the temperature detected by the outlet temperature sensor 63 is lower than 20°C (set temperature) by a threshold value or more (set temperature - threshold value ≥ detected temperature), the number of operating devices among the cooling towers 412, 422, and 432 is decreased. Conversely, if the temperature detected by the outlet temperature sensor 63 is higher than 20°C (set temperature) by the threshold value or more (set temperature + threshold value ≤ detected temperature), the number of operating devices among the cooling towers 412, 422, and 432 is increased.

As in the embodiment, when increasing or decreasing the number of operating devices among the cooling towers 412, 422, and 432, the device management apparatus 350 determines the standby time and prohibits the change operation. The components denoted by the same reference numerals as those in the embodiment, such as the device management apparatus 350 and the pump 340 according to Modification 2C, can have same configuration as that in the embodiment.

In a case where the standby time is excessively long after the number of operating devices is increased, the increase in the number of operating devices related to the cooling towers 412, 422, and 432 is delayed, and a problem such as abnormal stop of the chiller 211 occurs. If such a problem of the chiller 211 occurs, the temperature of the space to be air conditioned does not drop easily, which provides discomfort to people in the space to be air conditioned. In a case where the standby time is excessively short after the number of operating devices is increased, the increase in the number of operating devices related to the cooling towers 412, 422, and 432 is accomplished too early, leading to extra energy consumption.

In a case where the standby time is excessively short after the number of operating devices is decreased, the decrease in the number of operating devices related to the cooling towers 412, 422, and 432 is accomplished too early, leading to hunting in which any of the cooling towers 412, 422, and 432 repeats operation and stop. In a case where the standby time is excessively long after the number of operating devices is decreased, the decrease in the number of operating devices related to the cooling towers 412, 422, and 432 is delayed, leading to extra energy consumption.

(3-4) Modification 2D

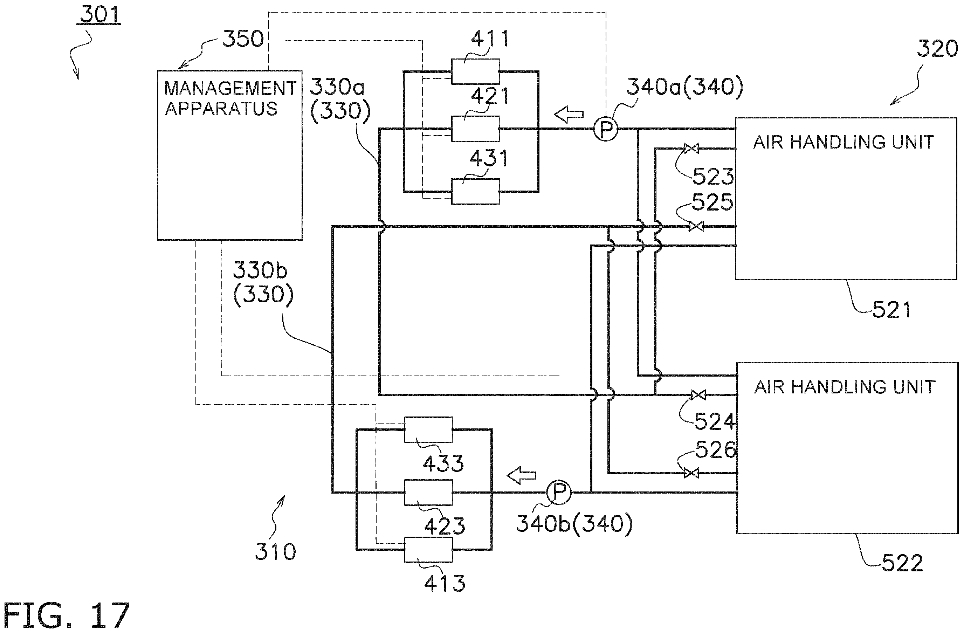

In Modification 2C, the description has been given of a case where the heat source devices 311, 312, and 313 are the cooling towers 412, 422, and 432. However, as illustrated in Fig. 17, the heat source devices 311, 312, and 313 may be water heaters 413, 423, and 433. The heat source system 301 illustrated in Fig. 17 includes, as the flow path 330, a flow path 330a that circulates through chillers 411, 421, and 431, and a flow path 330b that circulates through the water heaters 413, 423, and 433. The heat source system 301 illustrated in Fig. 17 further includes, as the pump 340, a pump 340a that circulates cold water in the flow path 330a, and a pump 340b that circulates hot water in the flow path 330b. Examples of the water heaters 413, 423, and 433 include boilers.

The use-side device 320 includes two air handling units 221 and 222. For example, the air handling units 221 and 222 cool spaces to be air conditioned (not illustrated) by using cold water, and heat the spaces to be air conditioned (not illustrated) by using hot water. A heat source unit 1 in Fig. 17 includes electromagnetic valves 223, 224, 225, and 226. When the electromagnetic valve 223 is closed, the supply of the cold water from the chillers 411, 421, and 431 to the air handling unit 221 is stopped. When the electromagnetic valve 224 is closed, the supply of the cold water from the chillers 411, 421, and 431 to the air handling unit 222 is stopped. When the electromagnetic valve 225 is closed, the supply of the hot water from the water heaters 413, 423, and 433 to the air handling unit 221 is stopped. When the electromagnetic valve 226 is closed, the supply of the hot water from the water heaters 413, 423, and 433 to the air handling unit 222 is stopped.

As in the embodiment, when increasing or decreasing the number of operating devices among the chillers 411, 421, and 431, the management device 50 determines the standby time and prohibits the change operation to increase or decrease the number of operating devices among the chillers 411, 421, and 431 during the standby time. Further, when increasing or decreasing the number of operating devices among the water heaters 413, 423, and 433, the management device 50 determines the standby time and prohibits the change operation to increase or decrease the number of operating devices among the water heaters 413, 423, and 433 during the standby time.

(3-5) Modification 2E

In the embodiment and modifications described above, the description has been given of a case where the heat medium is water. However, the heat medium is not limited to water. The heat medium may be, for example, brine, refrigerant, or oil.

(4) Features

(4-1) In the heat source system 301 described above, the standby time determination unit 352 determines the standby time in accordance with a parameter relating to the circulation flow rate of the heat medium, and the change operation prohibition unit 353 prohibits the change operation of the capacity of the heat source devices 310 during the standby time. As a result, the heat source system 301 can perform the change operation at an appropriate timing without performing the change operation too early or too late. Accordingly, the device management apparatus 350 can perform management in which suppression of an increase in the energy consumption of the heat source system 301 and comfort are balanced.

(4-2) In the case of the heat source devices 310 including the plurality of heat source devices 311 to 313, the heat source system 301 can increase or decrease the number of operating devices at an appropriate timing without increasing or decreasing the number of operating devices too early or too late. Accordingly the device management apparatus 350 can perform management, in which suppression of an increase in energy consumption and comfort are balanced, on the heat source system 301 including the plurality of heat source devices 311 to 313.

(4-3) While a description has been given with reference to Fig. 12, Fig. 13, and the like, the parameter relating to the circulation flow rate of the heat medium, which is used for the device management apparatus 350 described above to determine the standby time, is, for example, at least one of the capacity of the pump 340, the valve opening degrees of the flow rate adjustment valves 321, and the differential pressure detected by the differential pressure sensors 362. The capacity of the pump 340 is a variable related to the capacity of a circulation pump that circulates the heat medium. The valve opening degrees of the flow rate adjustment valves 321 are each a variable related to the degree of flow rate adjustment of a use-side device that uses the heat medium. The differential pressure detected by the differential pressure sensors 362 is a variable related to the pressure difference between the heat medium flowing into the use-side device and the heat medium flowing out of the use-side device. As described above, the device management apparatus 350 can easily determine the standby time by using at least one of the capacity of the circulation pump, the degree of flow rate adjustment, and the pressure difference of the heat medium.

(4-4) At least one of the frequency and number of the pump 340 is a variable related to the flow rate of a circulation pump that circulates the heat medium. In the embodiment described above, a method for determining the standby time by using such at least one of the frequency and number of the pump 340 has been described. Further, the determination of the standby time from the flow rate of the pump 340 and the retained amount of water in the heat source system 301 has been described above. The device management apparatus 350 determines the standby time by using the flow rate of the pump 340, which is a circulation pump. Thus, the standby time is more likely to be appropriate for the circulation of water, which is the heat medium.

(4-5) The device management apparatus 350 described in Modification 2A includes the change prohibition cancellation unit 354 (see Fig. 14). When the difference between the outlet temperature measured by the outlet temperature sensor 63 and the target temperature is larger than a predetermined value, the change prohibition cancellation unit 354 cancels the prohibition of the change operation of the capacity of the heat source devices 310 to change the temperature of the heat medium. The state in which the difference between the target temperature and the outlet temperature is large often occurs at the time of activation of the heat source system 301. Thus, the device management apparatus 350 as illustrated in Fig. 14 can improve the accuracy of management of the heat source devices 310 in which suppression of an increase in the energy consumption of the heat source system 301 and comfort are balanced at the time of system activation.

(4-6) In the device management apparatus 350, the notification unit 355 can notify whether the device management apparatus 350 is in a state in which the change operation is prohibited or in a state in which the change operation is not prohibited, and inform outside of the management state. With this notification, it is possible to inform outside of the period of transition during which the change of the capacity is prohibited, which makes it easier for the user or the like to allow adjustment of the capacity of the heat source system 301.

(4-7) The heat source system 301 includes the chillers 411, 421, and 431, the cooling towers 412, 422, and 432 or the water heaters 413, 423, and 433 that change the temperature of a heat medium circulating through the heat source system 301, and the device management apparatus 350 that determines the standby time in accordance with a parameter relating to the circulation flow rate of the heat medium and prohibits a change operation for changing the capacity of the chillers 411, 421, and 431, the cooling towers 412, 422, and 432, or the water heaters 413, 423, and 433 (for example, an operation of increasing or decreasing the number of operating devices) until a time interval from the previous change operation exceeds the standby time. As a result, the heat source system 301 can perform management, in which suppression of an increase in the energy consumption of the heat source system 301 and comfort are balanced, on the chillers 411, 421, and 431, the cooling towers 412, 422, and 432, or the water heaters 413, 423, and 433.

<Third Embodiment>

(1) Schematic Configuration of Device Management System

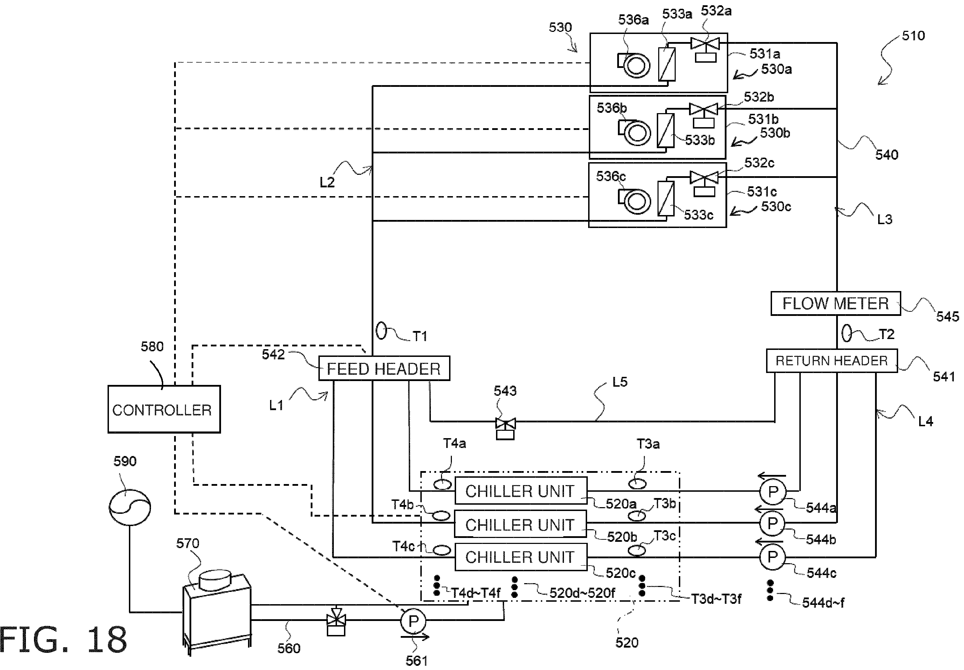

Fig. 18 is a schematic configuration diagram of a device management system 510 according to an embodiment of the present invention. The device management system 510 is capable of supplying air adjusted to an optimum temperature to a space to be air conditioned while optimally maintaining the number of operating devices among heat source devices of the system 510. The device management system 510 is mainly installed in a relatively large structure such as a building, a factory, a hospital, or a hotel.

As illustrated in Fig. 18, the device management system 510 mainly includes a chiller unit group 520, a use unit group 530, connection pipes L1 to L4 (corresponding to a first pipe), a communicating pipe L5 (corresponding to a second pipe), pumps 544a to 544f (corresponding to a pump), and a controller 580 (corresponding to a control calculation unit 583). The device management system 510 further includes a flow meter 545, a power meter 546, and a plurality of temperature detection sensors T1, T2, T3a to T3f, and T4a to T4f.

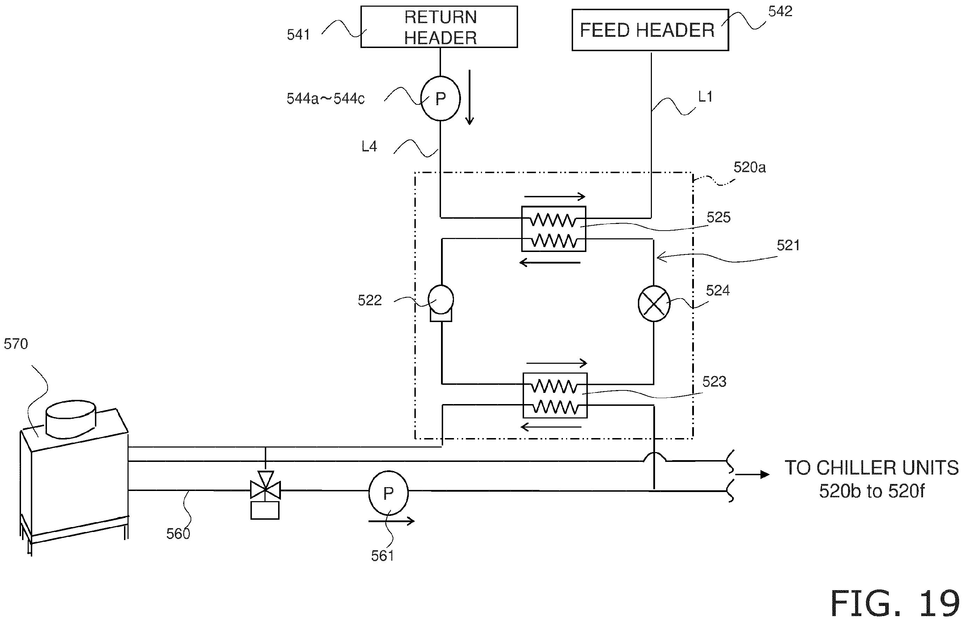

The chiller unit group 520 includes a plurality of chiller units 5520a to 520f (corresponding to heat source devices) each having formed therein a refrigerant circuit 521 illustrated in Fig. 19. As illustrated in Fig. 18, furthermore, the chiller unit group 520 is also connected to a cooling tower 570, and these components form a heat dissipation circuit 560. As illustrated in Fig. 18, furthermore, the pumps 544a to 544f, the chiller unit group 520, the use unit group 530, and so on form a heat medium circuit 540.

In Fig. 18, the illustration of components such as connection pipes of the device management system 510 is omitted, as appropriate, for convenience. In addition, the number of components of the device management system 510 illustrated in Fig. 18 is not limited and may be changed as appropriate.

(2) Detailed Configuration of Device Management System

(2-1) Chiller Unit Group and Refrigerant Circuit

The chiller unit group 520 according to this embodiment includes the plurality of chiller units 520a to 520f. The chiller units 520a to 520f are each a water-cooled heat source unit and are connected in parallel to each other. Each of the chiller units 520a to 520f includes the refrigerant circuit 521 illustrated in Fig. 19.

The refrigerant circuit 521 is configured by sequentially connecting a compressor 522, a radiator 523, an expansion valve 524, an evaporator 525, and so on. The refrigerant circuit 521 is filled with refrigerant.

The operating capacity of the compressor 522 is adjustable. The compressor 522 has a motor to which power is supplied via an inverter. Changing the output frequency of the inverter changes the number of revolutions, or the rotational speed, of the motor, and changes the operating capacity of the compressor 522.

The radiator 523 includes a first heat transfer tube connected to the refrigerant circuit 521, and a second heat transfer tube connected to the heat dissipation circuit 560. The radiator 523 performs heat exchange between the refrigerant flowing in the first heat transfer tube on the refrigerant circuit 521 side and the heat medium flowing through the second heat transfer tube on the heat dissipation circuit 560 side.

The expansion valve 524 is used to decompress the refrigerant in the refrigerant circuit 521 and allow the decompressed refrigerant to flow out, and is configured as an electric expansion valve.

The evaporator 525 includes a third heat transfer tube connected to the refrigerant circuit 521, and a fourth heat transfer tube connected to the heat medium circuit 540. The evaporator 525 performs heat exchange between the refrigerant flowing in the third heat transfer tube on the refrigerant circuit 521 side and the heat medium flowing through the fourth heat transfer tube on the heat medium circuit 540 side.

Each of the chiller units 520a to 520f including the refrigerant circuits 521 having such a configuration cools or heats water serving as a heat medium. In this embodiment, a capacity control lower limit a2 of each of the chiller units 520a to 520f is set to 20%, and a capacity control upper limit a1 of each of the chiller units 520a to 520f is set to 100%. The capacity control lower limit a2 and the capacity control upper limit a1 of each of the chiller units 520a to 520f can be appropriately set according to the chiller unit to be used. Alternatively, the capacity control lower limit a2 and the capacity control upper limit a1 of each of the chiller units 520a to 520f may each be set to a different value. In this embodiment, the capacity control lower limit a2 and the capacity control upper limit a1 of each of the chiller units 520a to 520f are the lower limit and the upper limit of the output (capacity) when each of the chiller units 520a to 520f is controlled in accordance with a load. In this embodiment, the capacity control lower limit a2 and the capacity control upper limit a1 are represented by % (the maximum output is set to 100% and the output in the stop state is set to 0%). However, the capacity control lower limit a2 and the capacity control upper limit a1 may be represented by kW or the like.

(2-2) Heat Dissipation Circuit

The heat dissipation circuit 560 is filled with water as a heat medium. The heat dissipation circuit 560 is mainly configured by sequentially connecting the radiator 523 in each of the chiller units 520a to 520f, a water pump 561, and the cooling tower 570. The water pump 561 is configured such that the discharge flow rate is adjustable, and circulates water in the heat dissipation circuit 560. In the cooling tower 570, the water circulating through the heat dissipation circuit 560 is cooled.

In Fig. 18, the water pump 561 is assigned an arrow indicating the direction of flow of the water in the heat dissipation circuit 560.

(2-3) Heat Medium Circuit, Flow Meter, and Temperature Detection Sensor

The heat medium circuit 540 forms a closed circuit, which is filled with water as a heat medium. The heat medium circuit 540 is mainly configured such that the pumps 544a to 544f, the respective evaporators 525 in the chiller units 520a to 520f, a bypass valve 543, the bypass valve 543, and use-side heat exchangers 533a, 533b, and 533c and use-side valves 532a, 532b, and 532c in use units 530a, 530b, and 530c constituting the use unit group 530 are sequentially connected by the connection pipes L1 to L4. Further, the heat medium circuit 540 is also configured such that the inlet side and the outlet side of the chiller units 520a to 520f are connected by the communicating pipe L5.

Specifically, ends of the connection pipes L1 are coupled to ends of the evaporators 525 on the outlet side of the chiller units 520a to 520f, and other ends of the connection pipes L1 are coupled to a feed header 542. An end of the connection pipe L2 is coupled to the outlet of the feed header 542. The other end of the connection pipe L2 is branched in the middle, and the distal ends of branched portions are coupled to the use-side heat exchangers 533a to 533c on the inlet side of the use units 530a to 530c. Ends of the connection pipes L3 are coupled to the outlet side of the use-side valves 532a to 532c on the outlet side of the use units 530a to 530c. Other ends of the connection pipes L3 merge in the middle, and the distal end of the merging portion is coupled to a return header 541. The connection pipes L4 are disposed in accordance with the number of chiller units 520a to 520f. Ends of the connection pipes L4 are coupled to the return header 541, and other ends of the connection pipes L4 are coupled to other ends of the evaporators 525 on the inlet side of the chiller units 520a to 520f. That is, the connection pipes L1 to L4 connect the chiller units 520a to 520f and the use units 530a to 530c in a cyclic manner. Water serving as a heat medium flows in the connection pipes L1 to L4.

The communicating pipe L5 connects the inlet side and the outlet side of all of the chiller units 520a to 520f (specifically, the inlet side and the outlet side of the evaporators 525) through the feed header 542 and the return header 541. Specifically, the connection pipes L1 connected to the inlet side of the chiller units 520a to 520f are connected to the feed header 542, and the connection pipes L4 connected to the outlet side of the chiller units 520a to 520f are connected to the return header 541. The communicating pipe L5 connects the feed header 542 and the return header 541 such that the inlet side and the outlet side of the chiller units 520a to 520f can be connected without the intervention of the use units 530a to 530c. In the communicating pipe L5, water that is a heat medium flowing out of the chiller units 520a to 520f and that does not flow in the use units 530a to 530c flows toward the return header 541. That is, the communicating pipe L5 can be said to be a pipe for returning water that is not used in the use units 530a to 530c to the chiller units 520a to 520f again.

The pumps 544a to 544f are disposed on the connection pipes L4 in such a manner as to correspond to the chiller units 520a to 520f, respectively. The pumps 544a to 544f are pumps of a variable capacity type in which the capacity is adjustable and the discharge capacity is adjustable, and are inverter driven by the controller 580. As indicated by arrows attached to the pumps 544a to 544f in Fig. 18, the pumps 544a to 544f send water as the heat medium flowing out of the use units 30a to 30f (more specifically, the use-side valves 532a to 532c) to the chiller units 520a to 520f, thereby circulating the water in the heat medium circuit 540. In other words, the pumps 544a to 544f cause the heat medium (i.e., water) flowing in the connection pipes L1 to L4 to circulate between the chiller units 520a to 520f and the use units 530a to 530c.

The bypass valve 543 adjusts the flow rate of the water flowing in the chiller unit 520a. The flow rate of the water flowing through the chiller unit 520a is determined by the opening degree of the bypass valve 543.

The use-side valves 532a to 532c and the use-side heat exchangers 533a to 533c in the use units 530a, 530b, and 530c will be described in "(2-4) Use Unit Group".

Further, the flow meter 545 and the plurality of sensors T1, T2, T3a to T3f, and T4a to T4f are attached to the heat medium circuit 540. The flow meter 545 is attached to the merging portion of the connection pipes L3 through which the water flowing out of the use units 530a to 530c flows, in front of the return header 541. The flow meter 545 measures the total flow rate of the water flowing through the use units 530a to 530c.

The temperature detection sensor T1 is attached to a portion of the connection pipe L2 before the pipe L2 is branched, near the second feed header 543. The temperature detection sensor T1 detects the temperature of the water as the heat medium flowing in the connection pipe L2. The temperature detection sensor T2 is attached to the merging portion of the connection pipes L3, near the return header 541. The temperature detection sensor T2 detects the temperature of the water as the heat medium flowing in the connection pipes L3. The temperature detection sensors T3a to T3f are disposed near the inlets of the chiller units 520a to 520f on the connection pipes L4 in such a manner as to correspond to the chiller units 520a to 520f, respectively. The temperature detection sensors T3 detect the temperatures of the water as the heat medium flowing in the connection pipes L4, that is, inlet temperatures b1 of the chiller units 520a to 520f. The temperature detection sensors T4a to T4f are disposed near the outlets of the chiller units 520a to 520f on the connection pipes L1 in such a manner as to correspond to the chiller units 520a to 520f, respectively. The temperature detection sensors T4 detect the temperatures of the water as the heat medium flowing in the connection pipes L1, that is, outlet temperatures b2 of the chiller units 520a to 520f.

The information detected by the flow meter 545 and the temperature detection sensors T1 to T2, T3a to T3f, and T4a to T4f is acquired by the controller 580 and is used for various types of control.

(2-4) Use Unit Group

As illustrated in Fig. 18, the use unit group 530 includes the plurality of use units 530a to 530c connected in parallel to each other.

The use units 530a to 530c have casings 531a to 531c each having a substantially rectangular parallelepiped shape, respectively. Each of the casings 531a to 531c has formed therein an air passage through which air flows. An air inflow end of the air passage is connected to an end of a suction duct, and an air outflow end of the air passage is connected to an end of an air supply duct. The other end of the suction duct and the other end of the air supply duct are connected to the space to be air conditioned.

The casings 531a to 531c have disposed therein the use-side valves 532a to 532c and the use-side heat exchangers 533a to 533c, which form the heat medium circuit 540, and fans 536a, 536b, and 536c.

The use-side valves 532a to 532c adjust the amounts of water flowing through the use-side heat exchangers 533a to 533c, respectively. That is, the flow rates of the water flowing through the use units 530a to 530c are determined by the opening degrees of the use-side valves 532a to 532c, respectively.

Each of the use-side heat exchangers 533a to 533c performs heat exchange between the air in the space to be air conditioned and the water in the heat medium circuit 540 to cool the air. Specifically, the use-side heat exchangers 533a to 533c are fin-and-tube heat exchangers each having a plurality of heat transfer fins and heat transfer tubes passing through the heat transfer fins. Water circulating through the heat medium circuit 540 flows through the heat transfer tubes of the use-side heat exchangers 533a to 533c, and the heat of the water is supplied to the air through the heat transfer tubes and the heat transfer fins to cool the air.

The fans 36a to 36c are each a fan whose number of revolutions can be changed stepwise by inverter control such that the volume of blowing the cooled air can be adjusted.

(2-5) System Controller

The controller 580 is used for the overall control of the device management system 510. The controller 580 will be described in detail below.

(3) Basic Operation of Device Management System

Next, the operation of the device management system 510 will be described. The device management system 510 is capable of performing a cooling operation for cooling air. The device management system 510 may be configured to be capable of also performing a heating operation, a dehumidifying operation, and a humidifying operation.

(3-1) Cooling Operation

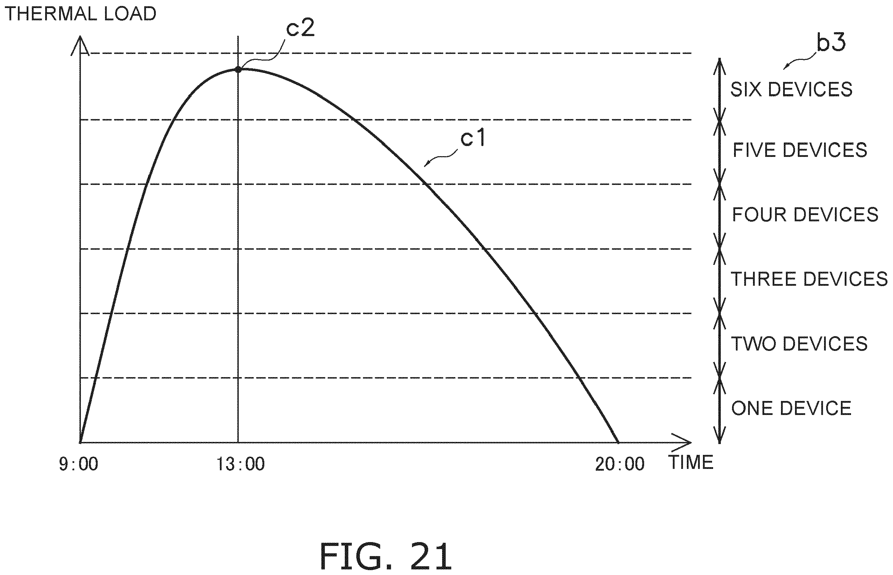

In a cooling operation illustrated in Fig. 21, the compressor 522, the pumps 544a to 544f, and the fans 36a to 36c are operated.

In the cooling operation, a refrigeration cycle is performed in the refrigerant circuit 521. Specifically, the refrigerant compressed by the compressor 522 radiates heat to the water flowing through the heat dissipation circuit 560 and condenses in the radiator 523. The refrigerant cooled by the radiator 523 is decompressed by the expansion valve 524. Thereafter, the refrigerant absorbs heat from the water flowing through the heat medium circuit 540 and evaporates in the evaporator 525. The refrigerant evaporated in the evaporator 525 is sucked into and compressed by the compressor 522. The water flowing through the heat dissipation circuit 560, which is heated by the radiator 523, radiates heat to the outdoor air in the cooling tower 570. In the heat medium circuit 540, the water cooled by the evaporator 525 of the refrigerant circuit 521 cools the air flowing through the respective air passages of the casings 531a to 531c of the use-side heat exchangers 533a to 533c. The water that has passed through the use-side heat exchangers 533a to 533c returns to the evaporator 525 of the refrigerant circuit 521 and is cooled again. In the heat medium circuit 540, the cold energy obtained by the water from the refrigerant in the evaporator 525 is conveyed to the use-side heat exchangers 533a to 533c and is supplied to the air.

In the use units 530a to 530c, as described above, the indoor air taken in from the spaces to be air conditioned through the suction ducts flows through the air passages of the casings 531a to 531c. The air is cooled and dehumidified in the use-side heat exchangers 533a to 533c by using the water in the heat medium circuit 540. The air cooled by the use-side heat exchangers 533a to 533c is supplied to the respective spaces to be air conditioned through the air supply ducts as supply air.

(4) Detailed Description of System Controller

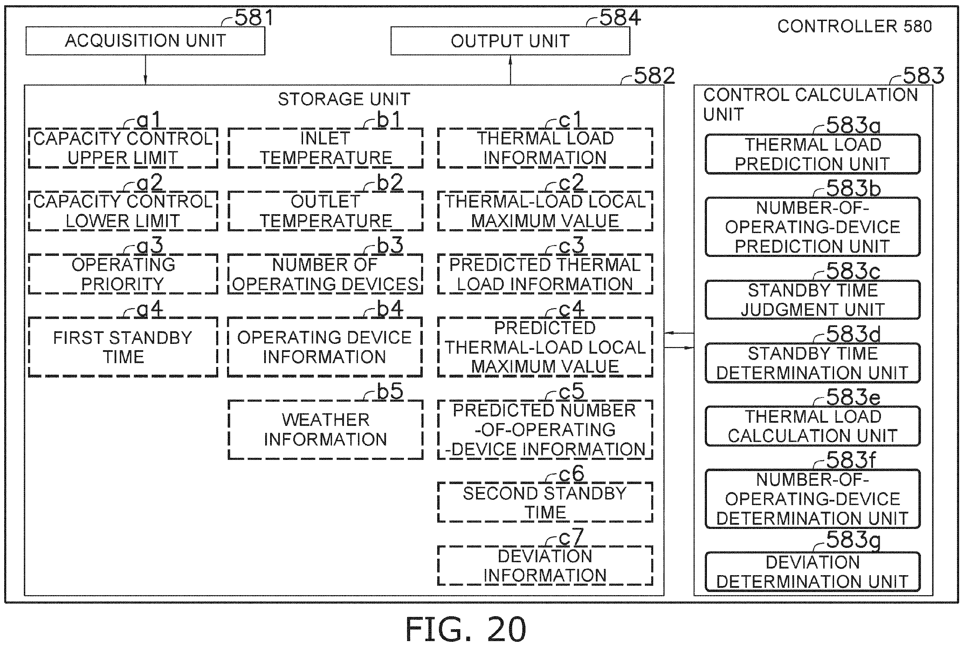

Fig. 20 is a block diagram schematically illustrating the configuration of the controller 580 according to this embodiment and various devices connected to the controller 580. As illustrated in Fig. 20, the controller 580 is implemented by a computer. The controller 580 includes a control calculation device and a storage device. The control calculation device can be implemented using a processor such as a CPU or a GPU. The storage device is constituted by a RAM, a ROM, a computer-readable storage medium, and the like. The storage device can be used as a database. The control calculation device reads a program stored in the storage device and performs predetermined information processing and calculation processing in accordance with the program. Further, the control calculation device can write a calculation result to the storage device or read information stored in the storage device in accordance with the program. As illustrated in Fig. 20, the controller 580 includes an acquisition unit 581, a storage unit 582, a control calculation unit 583, and an output unit 584.

(4-1) Acquisition Unit

The acquisition unit 581 is an interface that acquires various types of information for calculating thermal load information c1, predicted thermal load information c3, and the like from the various devices and the like connected to the controller 580.

Specifically, the acquisition unit 581 acquires, as information for calculating the thermal load information c1, the inlet temperatures b1 and the outlet temperatures b2 of the chiller units 520a to 520f, which are the detection results of the temperature detection sensors T3a to T3f and T4a to T4f.

The acquisition unit 581 further acquires, as information for calculating the predicted thermal load information c3, information b3 on the number of operating devices among the chiller units 520a to 520f, actual operating device information b4 of the chiller units 520a to 520f, weather information b5, and the like. The information b3 on the number of operating devices among the chiller units 520a to 520f includes information on whether each of the chiller units 520a to 520f is operating. For example, the information b3 on the number of operating devices among the chiller units 520a to 520f indicates that the chiller units 520a to 20c are operating and the chiller units 20d to 20f are not operating and indicates that three out of the six chiller units 520a to 520f are operating simultaneously. The actual operating device information b4 of the chiller units 520a to 520f includes information on the respective operating conditions of the chiller units 520a to 520f. For example, the operating device information b4 of the chiller units 520a to 520f indicates that the chiller unit 520a is operating at a capacity of 80% and the chiller unit 520f is operating at a capacity of 0% (not operating). The weather information b5 is information received from a sensor disposed in the device management system 510 or from an external system and is information indicating the outside air temperature, weather, humidity, and the like in the vicinity of the device management system 510. The information b3 on the number of operating devices among the chiller units 520a to 520f, the actual operating device information b4 of the chiller units 520a to 520f, and the weather information b5 are stored in the storage unit 582 in association with the thermal load information c1.

The acquisition unit 581 may acquire other information, if necessary. The acquisition unit 581 acquires the information described above at any time interval (for example, every minute) or in response to a request from the external system. The various types of information acquired by the acquisition unit 581 are stored and accumulated in appropriate areas of the storage unit 582.

(4-2) Storage Unit 582

The storage unit (accumulation unit) 582 stores and accumulates information used for a program, the information acquired by the acquisition unit 581, information processed and generated by the control calculation unit 583 through computation or the like, and so on. For convenience, information stored in advance in the storage unit 582 as the information used for the program is assigned the suffix a, the information acquired and accumulated by the acquisition unit 581 is assigned the suffix b, and the information processed and generated by the control calculation unit 583 is assigned the suffix c. The route of acquisition of the various types of information is not limited to this.

The storage unit 582 stores, as the information used for the program, the capacity control lower limit a2, the capacity control upper limit a1, and an operating priority a3 of each of the chiller units 520a to 520f. The operating priority a3 is the order of operation of the chiller units 520a to 520f.

The storage unit 582 further stores, as the information used for the program, a first standby time a4 that is set in advance by the administrator or the like of the device management system 510. The first standby time a4 is information indicating the standby time for the device management system 510 to change the number of operating devices among the chiller units 520a to 520f. A number-of-device determination unit of the control calculation unit 583 described below increases the number of operating devices among the chiller units 520a to 520f if a preset number change condition is continuously satisfied for the first standby time a4. The number change condition can be set in advance such that, for example, the output of the operating chiller units 520a to 520f is 85% or more. If a second standby time c6 is calculated by a standby time determination unit 583d of the control calculation unit 583 described below, a number-of-operating-device determination unit 583f increases the number of operating devices among the chiller units 520a to 520f on the basis of the second standby time c6.

The storage unit 582 is capable of storing the inlet temperatures b1, the outlet temperatures b2, the information b3 on the number of operating devices among the chiller units 520a to 520f, the operating device information b4 of the chiller units 520a to 520f, and the weather information b5, which are acquired by the acquisition unit 581, in association with each other on the basis of the times at which the acquisition unit 581 acquired the respective pieces of information.

The storage unit 582 accumulates, as the information processed and generated by the control calculation unit 583 through computation or the like, the thermal load information c1, a thermal-load local maximum value c2, the predicted thermal load information c3, a predicted thermal-load local maximum value c4, predicted number-of-operating-device information c5, information on the second standby time c6, and deviation information c7.

The thermal load information c1 is information indicating a thermal load calculated by a thermal load calculation unit 583e, which is a functional unit of the control calculation unit 583 described below. In this embodiment, the thermal load information c1 is calculated by using the information on the inlet temperatures b1 and the outlet temperatures b2 of the chiller units 520a to 520f stored in the storage unit 582. However, the thermal load information c1 may be calculated by using other information related to the device management system 510. The thermal load information c1 is calculated by the thermal load calculation unit 583e at intervals of a predetermined time (for example, every minute) and is accumulated in the storage unit 582 in association with each preset period (for example, each period of 9:00 to 20:00, which is an operating time period of the device management system 510). Fig. 21 is a graph representing the thermal load information c1 accumulated in the storage unit 582.

In the thermal load information c1 accumulated in the storage unit 582, a local maximum value of the thermal load in a preset period (9:00 to 20:00 on a certain day) and the time at which the local maximum value occurs are accumulated in the storage unit 582 as the thermal-load local maximum value c2 in the period in association with the thermal load information c1. For example, in Fig. 4, the thermal-load local maximum value c2 is the value of the thermal load at 13:00.

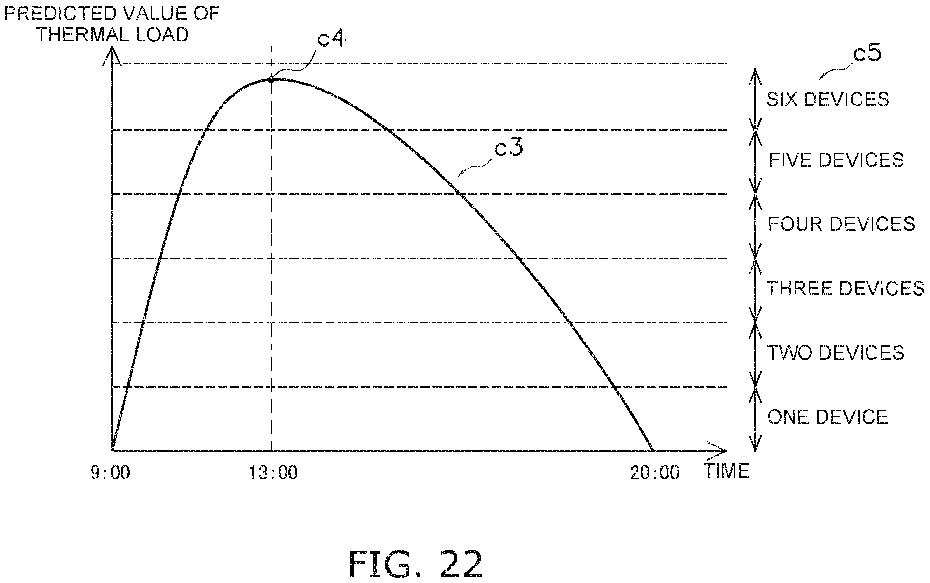

The predicted thermal load information c3 is information calculated by a thermal load prediction unit 583a, which is a functional unit of the control calculation unit 583, and is information indicating a predicted value of the thermal load in a predetermined period in the future (for example, 9:00 to 20:00 on the next day). The predicted thermal load information c3 in this embodiment is calculated on the basis of information stored in the storage unit 582, such as the thermal load information c1, the thermal-load local maximum value c2, the actual operating device information b4 of the chiller units 520a to 520f, and the weather information b5. The thermal load prediction unit 583a calculates a predicted value of the thermal load at predetermined time intervals (for example, every minute), and the calculated predicted value of the thermal load is accumulated in the storage unit 582 in association with each preset period (for example, each period of 9:00 to 20:00, which is an operating time period of the device management system 510). For example, Fig. 22 is a graph representing the predicted thermal load information c3 calculated on the basis of the thermal load information c1 in Fig. 21, the thermal-load local maximum value c2, the operating device information b4 of the chiller units 520a to 520f, and the weather information b5.

In Fig. 22, the vertical axis represents the predicted number-of-operating-device information c5 indicating the number of operating devices among the chiller units 520a to 520f, which is required to process the thermal load. The predicted number-of-operating-device information c5 is calculated by a number-of-operating-device prediction unit 583b.

In the predicted thermal load information c3, a local maximum value among predicted values of the thermal load in a preset period is accumulated in the storage unit 582 as the predicted thermal-load local maximum value c4 in the period. For example, in Fig. 22, the predicted thermal-load local maximum value c4 is the predicted value of the thermal load at 13:00.

The deviation information c7 is information calculated by a deviation determination unit 583g, which is a functional unit of the control calculation unit 583, and is information indicating the degree of deviation of the actual thermal load information c1 (the actual value of the thermal load) from the predicted thermal load information c3 (the predicted value of the thermal load). For example, if the predicted thermal load information c3 and the actual thermal load information c1 completely match, the deviation information c7 is 0%. In contrast, if the predicted thermal load information c3 and the actual thermal load information c1 are different, the deviation information c7 has a value of 1% or more based on the degree of the difference. In this embodiment, the deviation information c7 is represented by %. However, the deviation information c7 may be represented by any other unit or the like.

(4-3) Control Calculation Unit

The control calculation unit 583 includes the thermal load prediction unit 583a, the number-of-operating-device prediction unit 583b, a standby time judgment unit 583c, the standby time determination unit 583d, the thermal load calculation unit 583e, the number-of-operating-device determination unit 583f, and the deviation determination unit 583g serving as functional units whose functions are implemented by a control calculation device and a storage device.

The thermal load prediction unit 583a calculates the predicted thermal load information c3. The predicted thermal load information c3 calculated by the thermal load prediction unit 583a is accumulated in the storage unit 582.

The number-of-operating-device prediction unit 583b calculates the predicted number-of-operating-device information c5 on the basis of the predicted thermal load information c3 calculated by the thermal load prediction unit 583a and the capacity of the chiller units 520a to 520f. The predicted number-of-operating-device information c5 is information indicating the number of operating devices among the chiller units 520a to 520f, which is required to process the predicted value of the thermal load included in the predicted thermal load information c3. The predicted number-of-operating-device information c5 is accumulated in the storage unit 582 in association with the predicted thermal load information c3.

The standby time judgment unit 583c determines whether the predicted thermal-load local maximum value c4 included in the predicted thermal load information c3 can be processed by increasing the number of operating devices among the chiller units 520a to 520f based on the first standby time a4. Specifically, the standby time judgment unit 583c determines whether the number of operating devices can be increased to the number of operating devices among the chiller units 520a to 520f, which is required to process the predicted thermal-load local maximum value c4, for a period from the operating start time of the chiller units 520a to 520f to the time at which the predicted thermal-load local maximum value c4 occurs. If the standby time judgment unit 583c determines that the process described above is possible, the number-of-operating-device determination unit 583f described below determines whether to increase the number of operating devices on the basis of the first standby time a4. On the other hand, if the standby time judgment unit 583c determines that the process described above is not possible, the number-of-operating-device determination unit 583f described below determines whether to increase the number of operating devices on the basis of the second standby time c6 accumulated in the storage unit 582.

The standby time determination unit 583d calculates information indicating the second standby time c6. The second standby time c6 is information indicating the length of the standby time calculated on the basis of the predicted thermal load information c3. The information on the second standby time c6 in this embodiment is calculated by, if the predicted thermal load information c3 includes one predicted thermal-load local maximum value c4, dividing the elapsed time from the start of a predetermined period in the future to the time of occurrence of the predicted thermal-load local maximum value c4 by the number of times the number of operating devices among the chiller units 520a to 520f for processing the predicted thermal-load local maximum value c4 is increased. For example, the second standby time c6 calculated on the basis of the predicted thermal load information c3 in Fig. 22 is obtained by dividing the elapsed time from the start to the predicted thermal-load local maximum value c4, which is 48 hours (from 9:00 to 13:00), by the number of times the number of operating devices is increased, which is 5 (from one device to six devices). Therefore, the second standby time c6 is 48 minutes. The second standby time c6 calculated by the standby time determination unit 583d is stored in the storage unit 582.

The thermal load calculation unit 583e calculates, as the thermal load information c1, the actual value of the thermal load to be processed by the chiller units 520a to 520f on the basis of the inlet temperatures b1 and the outlet temperatures b2. The thermal load calculation unit 583e calculates the thermal load information c1 every minute, for example. The thermal load information c1 calculated by the thermal load calculation unit 583e is accumulated in the storage unit 582.

If a preset number change condition is continuously satisfied for the first standby time a4 or the second standby time c6, the number-of-operating-device determination unit 583f determines that the number of operating devices among the chiller units 520a to 520f is to be increased. If the number-of-operating-device determination unit 583f determines that the number of operating devices among the chiller units 520a to 520f is to be increased, information indicating the increase in the number of operating devices among the chiller units 520a to 520f is transmitted to the chiller units 520a to 520f, and any of the chiller units 20b to 20f starts operating.

The deviation determination unit 583g determines the degree of deviation of the actual thermal load information c1 acquired by the acquisition unit 581 and stored in the storage unit 582 from the predicted thermal load information c3 calculated by the thermal load prediction unit 583a and stored in the storage unit 582, and generates the deviation information c7 as information indicating the degree of deviation. The deviation information c7 is stored in the storage unit 582. The deviation determination unit 583g determines the degree of deviation at intervals of a predetermined time (for example, every minute) and generates the deviation information c7.

(4-4) Output Unit

The output unit 584 is a display, a touch panel, a speaker, or the like capable of outputting information accumulated in the storage unit. The output unit 584 can function as a deviation information c7 output unit that outputs the deviation information c7 stored in the storage unit 582.

(5) Standby Time Determination Process

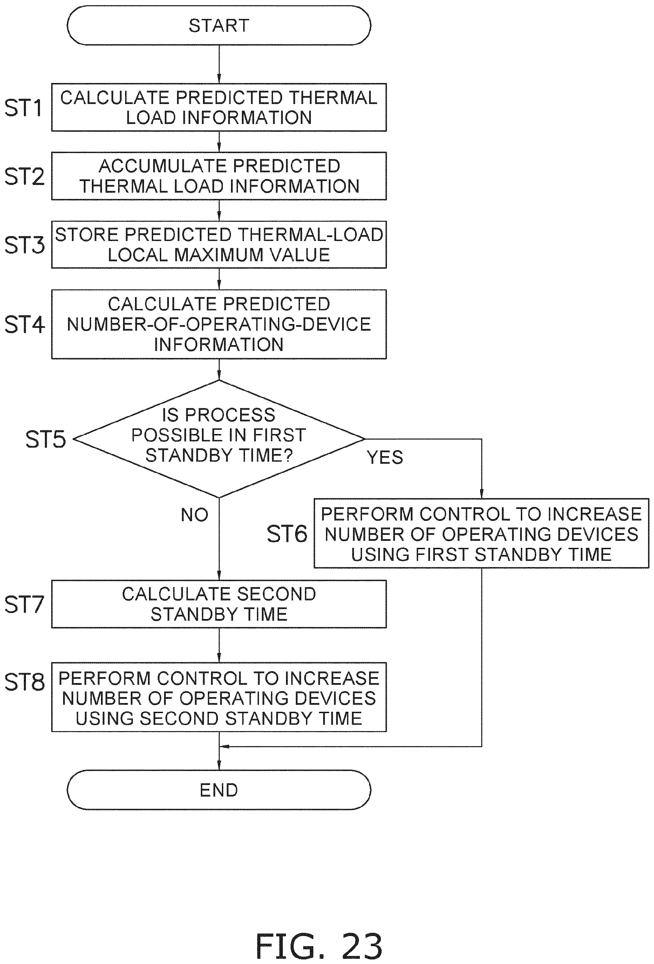

Fig. 23 illustrates a process flow for determining the standby time in the device management system 510 according to this embodiment.

As illustrated in Fig. 23, the thermal load prediction unit 583a of the control calculation unit 583 calculates the predicted thermal load information c3 on the basis of the information accumulated in the storage unit 582 and stored in the storage unit 582, such as the thermal load information c1, predicted local maximum information, predicted local minimum information, the operating device information b4 of the chiller units 520a to 520f, and the weather information b5 (step ST1).

Here, the thermal load prediction unit 583a calculates the predicted thermal load information c3 at predetermined time intervals (for example, every minute) in a preset predetermined period in the future (for example, 9:00 to 20:00 on the next day). The (plurality of pieces of) thermal load information c1 calculated by the thermal load prediction unit 583a is accumulated in the storage unit 582 (step ST2). At this time, in the thermal load information c1, a predicted thermal-load local maximum value in the predetermined period and the time at which the local maximum value occurs are stored in the storage unit 582 in association with the thermal load information c1 (step ST3). Further, the number-of-operating-device prediction unit 583b calculates the predicted number-of-operating-device information c5 on the basis of the predicted thermal load information c3 and the capacity of the chiller units 520a to 520f, and stores the predicted number-of-operating-device information c5 in the storage unit 582 in association with the predicted thermal load information c3 (step ST4). Here, the predicted thermal load information, the predicted local maximum information, and the predicted number-of-operating-device information c5 may be stored in association with each other as in, for example, the graph illustrated in Fig. 22.

Then, the standby time judgment unit 583c of the control calculation unit 583 determines whether the predicted thermal-load local maximum value can be processed by processing based on the first standby time a4 (step ST5). Specifically, for example, if the predicted thermal load information c3 calculated in step ST1 is that illustrated in Fig. 22, the thermal-load local maximum value c2 is the value of the thermal load at 13:00. Further, the six chiller units 520a to 520f are required to process the thermal load.

Here, for example, if the first standby time a4 set in advance by the administrator or the like of the device management system 510 is 30 minutes, the six chiller units 520a to 520f can be caused to operate at 13:00. Thus, the standby time judgment unit 583c determines that the process is possible (YES). If this determination is made, the device management system 510 performs control to increase the number of operating devices by using the first standby time a4. Specifically, if a preset number change condition is continuously satisfied for the first standby time a4, the device management system 510 determines that control is to be performed to increase the number of operating devices among the chiller units 520a to 520f in accordance with a program (step ST6).

On the other hand, for example, if the first standby time a4 set in advance is 1 hour, it requires 5 hours to operate the six chiller units 520a to 520f, and it is not possible to cause the six chiller units 520a to 520f to operate at 13:00. Thus, the standby time judgment unit 583c determines that the process is not possible (NO). If this determination is made, the standby time judgment unit 583c determines that control is to be performed to increase the number of operating devices by using the second standby time c6 calculated by the standby time determination unit 583d (step ST7).

In step ST7, the standby time determination unit 583d performs calculation by dividing the elapsed time from the start time of a predetermined period in the future (for example, 9:00) to the time of occurrence of the predicted thermal-load local maximum value c4 (for example, 13:00) by the number of times the number of operating devices among the chiller units 520a to 520f for processing the predicted thermal-load local maximum value c4 is increased. For example, if the elapsed time is 4 hours illustrated in Fig. 22 and the number of times the number of operating devices is increased is 5, the second standby time c6 is 48 minutes.

As described above, through this processing, the device management system 510 determines whether to perform processing for increasing the number of operating devices among the chiller units 520a to 520f on the basis of a first time period, or perform processing for increasing the number of operating devices among the chiller units 520a to 520f on the basis of a second time period. If a preset number change condition is continuously satisfied for the first standby time a4 or the second standby time c6, the number-of-operating-device determination unit 583f determines that the number of operating devices among the chiller units 520a to 520f is to be increased (step ST8).

(6) Features

(6-1)
The device management system 510 according to this embodiment is a system for managing the number of operating devices among the chiller units 520a to 520f serving as heat source devices. The device management system 510 includes the number-of-operating-device determination unit 583f and the standby time determination unit 583d. When a condition for changing the number of operating devices regarding a thermal load is continuously satisfied for a predetermined standby time, the number-of-operating-device determination unit 583f determines that the number of operating devices is to be increased. The standby time determination unit determines the length of the standby time on the basis of the predicted thermal load information c3.

There is available an existing system that adopts a plurality of heat source devices, in which the number of operating devices among heat source devices is changed in accordance with a thermal load. In such a system, the thermal load may be predicted on the basis of previous information on the thermal load, and the number of operating devices among the heat source devices may be determined. In prediction based on the previous information on the thermal load, however, the actual thermal load during the operation of the heat source devices may greatly deviate from the previous information on the thermal load depending on the operating condition of the heat source devices or the weather condition. If the system is operated in such a state, a large load is imposed on the heat source devices, leading to extra power consumption.

With the configuration described above, the device management system 510 according to this embodiment determines the standby time for changing the number of operating devices among the heat source devices. This makes it possible to predict the thermal load on the basis of the previous information on the thermal load and manage the number of operating devices among the heat source devices on the basis of the actual thermal load during the operation of the heat source devices. The device management system 510 according to this embodiment appropriately manages the number of operating devices among the heat source devices, thereby reducing the load on the heat source devices and contributing to reduction in extra power consumption.

(6-2)
The device management system 510 according to this embodiment further includes the thermal load calculation unit 583e and the storage unit 582 serving as an accumulation unit. The thermal load calculation unit 583e calculates the thermal load information c1. The storage unit 582 accumulates the thermal load information c1 calculated by the thermal load calculation unit 583e. The predicted thermal load information c3 is calculated on the basis of the thermal load information c1 accumulated in the storage unit 582.

This contributes to more accurate prediction of the thermal load and contributes to controlling the number of operating devices among the heat source devices to an appropriate number. (6-3)

In the device management system 510 according to this embodiment, if the number of operating devices among the chiller units 520a to 520f is predicted to be insufficient, the standby time determination unit 583d reduces the length of the standby time on the basis of the predicted thermal load information c3. If the number of operating devices among the chiller units 520a to 520f is predicted to be excessive, the standby time determination unit 583d increases the length of the standby time.

This contributes to more accurate prediction of the thermal load and contributes to controlling the number of operating devices among the heat source devices to an appropriate number.

(6-4)
The storage unit 582 of the device management system 510 according to this embodiment accumulates the information b3 on the number of operating devices among the chiller units 520a to 520f for processing the thermal load, in association with the thermal load information c 1.

(6-5)
The thermal load calculation unit 583e of the device management system 510 according to this embodiment calculates the thermal load information c1 on the basis of the inlet temperatures, which are the temperatures of the heat medium entering the chiller units 520a to 520f, and the outlet temperatures, which are the temperatures of the heat medium exiting from the chiller units 520a to 520f. The storage unit 582 further accumulates the thermal load information c1 calculated by the thermal load calculation unit 583e, the weather information b5, and/or the operating device information of the chiller units 520a to 520f in association with each other.

This contributes to more accurate prediction of the thermal load and contributes to controlling the number of operating devices among the heat source devices to an appropriate number.

(6-6)

If the number of occurrences of the predicted thermal-load local maximum value c4 included in the predicted thermal load information c3 is one, the standby time determination unit 583d of the device management system 510 according to this embodiment determines, as the length of the standby time, a value obtained by dividing the time required from the operating start time of the chiller units 520a to 520f to the time of occurrence of the predicted thermal-load local maximum value c4 by the required number of times the number of devices is increased to make the number of operating devices among the chiller units 520a to 520f at the time of occurrence of the predicted thermal-load local maximum value c4. The predicted thermal-load local maximum value c4 is a local maximum value of predicted values of the thermal load included in the predicted thermal load information c3.

This contributes to more accurate prediction of the thermal load and contributes to controlling the number of operating devices among the heat source devices to an appropriate number.

(6-7)

The standby time determination unit 583d of the device management system 510 according to this embodiment calculates the time at which the number of operating devices among the chiller units 520a to 520f is increased, on the basis of the thermal load information c1 and the information b3 on the number of operating devices among the chiller units 520a to 520f. Further, the standby time determination unit 583d sets, as the length of the standby time, the time period from when the number of operating devices is changed to when the number of operating devices is next changed.

This contributes to more accurate prediction of the thermal load and contributes to controlling the number of operating devices among the heat source devices to an appropriate number.

(6-8)

The device management system 510 according to this embodiment further includes the deviation information output unit 584. If the deviation of the actual thermal load in the chiller units 520a to 520f from the thermal load information c1 is larger than a predetermined threshold value, the deviation information output unit 584 outputs the thermal load deviation information c7.

(7) Modifications

(7-1) Modification 1

In the embodiment described above, a process for determining an increase in the number of operating devices among the chiller units 520a to 520f has been described. However, the device management system 510 according to this embodiment can also be used in a process for determining a decrease in the number of operating devices among the chiller units 520a to 520f.

In the device management system 510 according to this embodiment, the storage unit 582 may store a third standby time for decreasing the number of operating devices that is set in advance by the administrator or the like of the device management system 510. The third standby time is information indicating a standby time for the device management system 510 to decrease the number of operating devices among the chiller units 520a to 520f. If a preset number change condition is continuously satisfied for the third standby time, the number-of-device determination unit of the control calculation unit 583 decreases the number of operating devices among the chiller units 520a to 520f. The number change condition can be set in advance such that, for example, the output of the operating chiller units 520a to 520f is less than or equal to 50%. If a fourth standby time is calculated by the standby time determination unit 583d of the control calculation unit 583, the number-of-operating-device determination unit 583f decreases the number of operating devices among the chiller units 520a to 520f on the basis of the fourth standby time.

The fourth standby time is information indicating the length of the standby time calculated on the basis of the predicted thermal load information c3 and is calculated by, if the predicted thermal load information c3 includes one predicted thermal-load local maximum value c4, dividing the elapsed time from the time of occurrence of the predicted thermal-load local maximum value c4 to the end time of a predetermined period in the future by a required number of times the number of operating devices is decreased. For example, in the case illustrated in Fig. 22, the elapsed time from the time of occurrence of the predicted thermal-load local maximum value c4 to the end time of a predetermined period in the future is 7 hours (from 13:00 to 20:00), and the required number of times the number of operating devices is decreased is 5 (from six devices to one device). Therefore, the fourth standby time is 84 minutes.

Accordingly, the device management system 510 according to this embodiment can predict the thermal load on the basis of previous information on the thermal load, and manage the number of operating devices among heat source devices on the basis of the actual thermal load during the operation of the heat source devices. The device management system 510 according to this embodiment appropriately manages the number of operating devices among the heat source devices, thereby reducing the load on the heat source devices and contributing to reduction in extra power consumption.

(7-2) Modification 2

In the embodiment described above, the description has been given of a case where the number of occurrences of a peak load included in the thermal load information $c_1$ is one. However, the device management system 510 according to this embodiment can be used even if a peak load occurs a plurality of times.

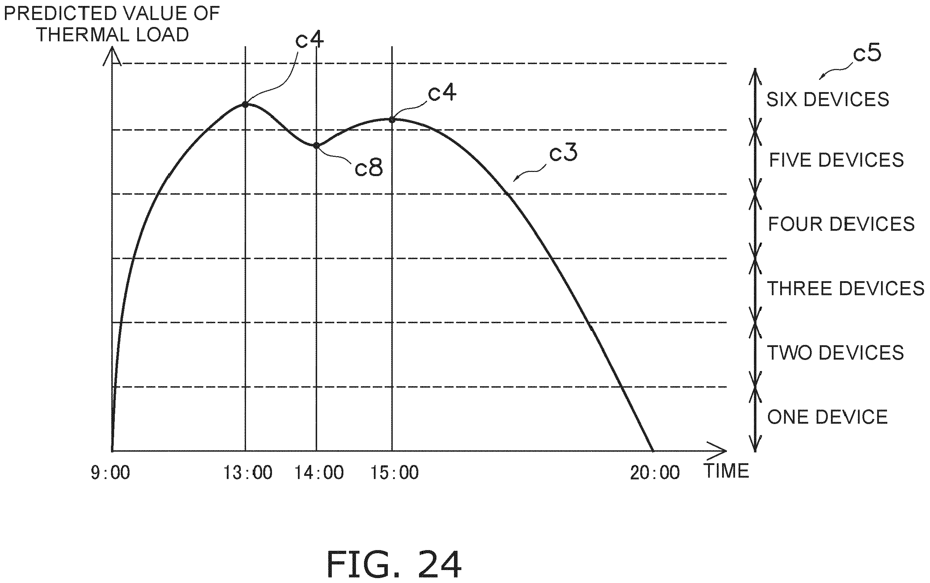

For example, Fig. 24 illustrates the predicted thermal load information $c_3$ in a different period (9:00 to 20:00 on a different day) from that in Fig. 22. In Fig. 24, predicted thermal-load local maximum values $c_4$ are the predicted value of the thermal load at 13:00, and the predicted value of the thermal load at 15:00. Further, a local minimum value of the thermal load between the two predicted thermal-load local maximum values $c_4$ in Fig. 24 is accumulated in the storage unit 582 as a predicted thermal-load local minimum value $c_8$ in a preset period. The predicted thermal-load local maximum values $c_4$ and the predicted thermal-load local minimum value $c_8$ in the preset period are accumulated in the storage unit 582 in association with each other. The number of predicted thermal-load local maximum values $c_4$ in the preset period may be one or more, and the number of predicted thermal-load local minimum values $c_8$ may be one or more or zero (no predicted thermal-load local minimum value $c_8$).

If a plurality of predicted thermal-load local maximum values $c_4$ are present, the standby time determination unit 583d calculates, as a fifth standby time, a standby time from the time of occurrence of the predicted thermal-load local minimum value $c_8$ to the time of occurrence of the next predicted thermal-load local maximum value $c_4$. The fifth standby time is calculated by dividing the elapsed time from the time of occurrence of the predicted thermal-load local minimum value $c_8$ to the time of occurrence of the next predicted thermal-load local maximum value $c_4$ by the number of times the number of operating devices is increased during the elapsed time. For example, in the predicted thermal load information $c_3$ illustrated in Fig. 24, the elapsed time is 1 hour (from 14:00 to 15:00), and the number of times the number of operating devices is increased is 1 (from five devices to six devices). Therefore, the fifth standby time is 30 minutes.

If the number of occurrences of the predicted thermal-load local maximum value $c_4$ included in the predicted thermal load information $c_3$ is plural, the standby time determination unit 583d of the device management system 510 according to this embodiment sets the length of the standby time from the time at which the predicted thermal-load local minimum value $c_8$ included in the predicted thermal load information $c_3$ occurs until the predicted thermal-load local maximum value $c_4$ next occurs, to a value obtained by dividing the time required from the time at which the predicted thermal-load local minimum value $c_8$ included in the predicted thermal load information $c_3$ occurs until the predicted thermal-load local maximum value $c_4$ next occurs by the number of times the number of operating devices is increased or decreased in the time slot. The predicted thermal-load local maximum value $c_4$ is a local maximum value of predicted values of the thermal load included in the predicted thermal load information $c_3$. The predicted thermal-load local minimum value $c_8$ is a local minimum value of predicted values of the thermal load included in the predicted thermal load information $c_3$.

While embodiments of the present disclosure have been described, it will be understood that forms and details can be changed in various ways without departing from the spirit and scope of the present disclosure as recited in the claims.

**REFERENCE SIGNS LIST**

| | |
|---|---|
| 1 | heat source system |
| 10, 11, 12, 13 | heat source device (example of specific device) |
| 40 | pump (example of specific device) |
| 50 | device management apparatus |
| 111, 121, 131 | chiller (example of specific device) |
| 62 | differential pressure sensor |
| 63 | outlet temperature sensor |
| 301 | heat source system |
| 310, 311, 312, 313 | heat source device |
| 320 | use-side device |
| 340 | pump |
| 350 | management apparatus |
| 363 | outlet temperature sensor |
| 411, 421, 431 | chiller |
| 412, 422, 432 | cooling tower |
| 413, 423, 433 | water heater |

| 510 | device management system |
| --- | --- |
| 520a to 520f | heat source device |
| 582 | accumulation unit |
| 583d | standby time determination unit |
| 583e | thermal load calculation unit |
| 583f | number-of-operating-device determination unit |
| 584 | deviation information output unit |
| b1 | inlet temperature |
| b2 | outlet temperature |
| b3 | information on the number of operating devices |
| b5 | weather information |
| c1 | thermal load information |
| c3 | predicted thermal load information |
| c4 | predicted thermal-load local maximum value |
| c7 | deviation information |
| c8 | predicted thermal-load local minimum value |

## CITATION LIST

## PATENT LITERATURE

PTL 1: Japanese Unexamined Patent Application Publication No. 10-89742

## Claims

1. A device management apparatus (50) for managing a heat source device (10, 11, 12, 13, 40, 111, 121, 131) that changes a state of a heat medium circulating through a heat source system (1), wherein the device management apparatus is implemented by a computer, wherein

    the device management apparatus receives a state value of the heat medium that is measured by a sensor included in the heat source system, the state value being a temperature and
    the device management apparatus prohibits a change operation of a capacity of the heat source device on the basis of a parameter indicatinga pattern of change in the state value.

2. The device management apparatus (50) according to Claim 1, wherein the parameter includes a variable related to at least one of the number of extreme values of the state value and a fluctuation range of the state value in a predetermined period.

3. The device management apparatus (50) according to Claim 2, wherein the parameter is a variable related to the number of extreme values of the state value and a variance of the state value in the predetermined period.

4. The device management apparatus (50) according to any one of Claims 1 to 3, wherein the device management apparatus determines a threshold value of the parameter indicating a limit for prohibiting the change operation of the capacity of the heat source device, from a relationship between a value of the parameter and the number of times the capacity of the heat source devices is changed.

5. The device management apparatus (50) according to any one of Claims 1 to 4, wherein the device management apparatus notifies whether the device management apparatus is in a state in which the change operation is prohibited or in a state in which the change operation is not prohibited.

6. A heat source system (1) comprising:

    a heat source device (10, 11, 12, 13, 40, 111, 121, 131) that changes a state of a heat medium circulating through the heat source system;
    a sensor (62, 63) that measures the state of the heat medium; and
    a device management apparatus (50) that receives a state value of the heat medium that is measured by the sensor and prohibits a change operation of a capacity of the heat source device on the basis of a parameter related to a change in the state value, wherein the device management apparatus (5) is according to any of the previous claims from 1 to 5, wherein
the sensor is a temperature sensor that measures a temperature of the heat medium, a flow rate sensor that measures a flow rate of the heat medium, or a pressure sensor that measures a pressure of the heat medium.

7. The heat source system (1) according to Claim 6, wherein

the heat source device is a heat source device (10, 11, 12, 13, 111, 121, 131) that changes the temperature of the heat medium,
the sensor is an outlet temperature sensor (63) that measures a temperature of the heat medium exiting from the heat source device, and
when a difference between an outlet temperature measured by the outlet temperature sensor and a target temperature is larger than a predetermined value, the prohibition of the change operation of a capacity of the heat source device to change the temperature of the heat medium is canceled.

8. The heat source system (1) according to Claim 6, wherein
the heat source device is a chiller (111, 121, 131), a cooling tower (11, 12, 13), or a pump (40).

FIG. 1

FIG. 2

FIG. 3

TEMPERATURE

START POINT IN
TIME OF WINDOW

END POINT IN
TIME OF WINDOW

FIG. 4A

TEMPERATURE

START POINT IN
TIME OF WINDOW

END POINT IN
TIME OF WINDOW

FIG. 4B

FIG. 4C

FIG. 5A

FIG. 5B

FIG. 6

EP 4 230 924 A2

FIG. 7

FIG. 8

FIG. 9

FIG. 10

EP 4 230 924 A2

FIG. 11

FIG. 12

FIG. 13

EP 4 230 924 A2

FIG. 14

FIG. 15

301

320

330

310

340

331

311  312  313

332

350

351  MANAGEMENT APPARATUS

NUMBER CONTROL CONTROLLER

352  STANDBY TIME DETERMINATION UNIT

353  CHANGE OPERATION PROHIBITION UNIT

355  NOTIFICATION UNIT

FIG. 16

FIG. 17

EP 4 230 924 A2

FIG. 18

EP 4 230 924 A2

FIG. 19

FIG. 20

EP 4 230 924 A2

FIG. 21

EP 4 230 924 A2

FIG. 22

EP 4 230 924 A2

START

ST1 | CALCULATE PREDICTED THERMAL LOAD INFORMATION

ST2 | ACCUMULATE PREDICTED THERMAL LOAD INFORMATION

ST3 | STORE PREDICTED THERMAL-LOAD LOCAL MAXIMUM VALUE

ST4 | CALCULATE PREDICTED NUMBER-OF-OPERATING-DEVICE INFORMATION

ST5 | IS PROCESS POSSIBLE IN FIRST STANDBY TIME?

YES

NO

ST6 | PERFORM CONTROL TO INCREASE NUMBER OF OPERATING DEVICES USING FIRST STANDBY TIME

ST7 | CALCULATE SECOND STANDBY TIME

ST8 | PERFORM CONTROL TO INCREASE NUMBER OF OPERATING DEVICES USING SECOND STANDBY TIME

END

FIG. 23

FIG. 24

EP 4 230 924 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10089742 A